# EUROPEAN PATENT APPLICATION

(11) **EP 3 633 501 A1**
(43) Date of publication of application: **08.04.2020**
(21) Application number: 18809499.9
(22) Date of filing: 07.05.2018
(51) Int. Cl.: G06F 3/12, B41J 5/30

(54) **PRINT SERVER DEVICE, PRINT OBJECT CONFIGURATION METHOD, AND RECORDING MEDIUM**

(30) Priority: 02.06.2017 JP 2017109722
(71) Applicant: Amazing Day Inc., Tokyo 141-0021 (JP)
(72) Inventor: NAGANUMA, Kohei, Tokyo 141-0021 (JP); KIMURA, Toshinori, Tokyo 141-0021 (JP)
(74) Representative: TBK
(86) International application number: PCT/JP2018/017669
(87) International publication number: WO 2018/221125

(57) **Abstract**

With a conventional device, rendering is performed only after every piece of component information is on hand, making the process of completing the configuration of a final product a time-consuming one. [Solution] Provided is a print server device comprising: a component information storage unit wherein is stored two or more instances of component information in association with print object identifiers for identifying print objects; a component image storage unit wherein is stored two or more component images associated with the two or more instances of component information; a rendering unit for performing rendering on one or more instances of the component information stored in the component information storage unit and acquiring the component images; a component image accumulation unit for accumulating in the component image storage unit the component images acquired by the rendering unit; and a print object configuration unit for configuring a print object by compositing two or more of the component images stored in the component image storage unit. By means of the above, it is possible to rapidly configure a finalized print object after all of two or more instances of component information constituting a single print object are on hand.

## Description

### Technical Field

The present invention relates to a print server device or the like that configures a print object by using two or more instances of component information.

### Background Art

In a print server device of the related art, a normal print condition and a test print condition are set such that print data of normal print and print data of test print that are generated from the same manuscript data are printed by the same print device, and thus, the normal print and the test print are sorted and processed by the same print device (for example, refer to Patent Document 1).

In addition, there was a web service for receiving and printing a manuscript of data (for example, refer to Non-Patent Document 1).

### Citation List

### Patent Document

Patent Document 1: JP-A-2013-3827 (page 1, Fig. 1, and the like)

### Non-Patent Document

Non-Patent Document 1: "Online Print Service Printpac", [searched on June 1, 2016], Internet [URL: http://www.printpac.co.jp/]

### Summary of the Invention

### Technical Problem

However, in the technology of the related art as described above, rendering was not performed on each component, and for example, the rendering was started after all of two or more instances of component information for configuring one print object were on hand. For this reason, in the technology of the related art, it takes time to finish the configuration of a final product after all instances of component information were on hand.

In addition, in the technology of the related art, there was a problem that, in the case of configuring the final product, for example, after all of two or more instances of component information for configuring one print object were on hand, including the rendering of the component, a load on the device was temporarily concentrated.

Therefore, an object of the invention is to reduce a time until the configuration of a final product is finished after rendering processing is performed in advance on one or more components and all instances of component information are on hand, and to fulfill a load dispersion of a device.

### Solution to Problem

A print server device of a first invention is a print server device, including: a component information storage unit in which two or more instances of component information are stored in association with print object identifiers for identifying one print object; a component image storage unit in which two or more component images associated with the two or more instances of component information are stored; a rendering unit for performing rendering on each of one or more instances of component information stored in the component information storage unit and acquiring the component image that is an image of a component; a component image accumulation unit for accumulating the component image acquired by the rendering unit in the component image storage unit; and a print object configuration unit for configuring a print object by compositing the two or more component images stored in the component image storage unit.

According to such a configuration, the rendering is performed on one or more components before all of two or more components necessary for the completion are on hand, and thus, it is possible to rapidly configure a final print object after all instances of component information are on hand.

In addition, a print server device of a second invention is a print server device, in which the rendering unit determines whether or not the rendering is performed on the component information, on the basis of a rendering condition that is a condition for performing the rendering, performs the rendering on the component information with the case of satisfying the rendering condition as a trigger, and acquires the component image, in the first invention.

According to such a configuration, the rendering is performed on each component before all of two or more instances of component information for configuring one print object are on hand, and thus, it is possible to reduce a time until the configuration of a final product is finished after all instances of component information are on hand.

In addition, a print server device of a third invention is a print server device, in which the rendering condition is a condition relevant to a timing, in the second invention.

According to such a configuration, it is possible to perform the rendering on the component image at a suitable timing, and to reduce a time until the configuration of a final product is finished after all instances of component information are on hand.

In addition, a print server device of a fourth invention is a print server device, in which the rendering condition includes a condition relevant to an attribute value of the component, and the rendering unit performs the rendering or does not perform the rendering, in accordance with the attribute value of the component, in the second invention or the third invention.

According to such a configuration, it is possible to suitably perform the rendering in advance, in accordance with the attribute value of the component.

In addition, a print server device of a fifth invention is a print server device further including: a print object configuration information storage unit in which print object configuration information that is information including the print object identifier and two or more component identifiers for identifying the component information for configuring the print object identified by the print object identifier and is information indicating a configuration of a final print object is stored, in which the print object configuration unit configures a non-final print object by compositing one or more component images that are associated with one or more instances of component information identified by the print object identifiers and are stored in the component image storage unit, before all of the instances of component information that are associated with the two or more component identifiers pairing up with the print object identifiers included in the print object configuration information and configure the print object identified by the print object identifier included in the print object configuration information are on hand, in any one of the first invention to the fourth invention.

According to such a configuration, it is possible to configure a non-final print object by compositing one or more component images associated with one or more instances of component information that are on hand before all instances of component information are on hand. For this reason, it is possible to reduce a time until the configuration of a final product is finished after all instances of component information are on hand.

### Advantageous Effects of the Invention

According to the invention, a print server device or the like that is capable of rapidly configuring a final print object after all of two or more instances of component information for configuring one print object are on hand is fulfilled.

In addition, according to the invention, a load dispersion of a print server device or the like is fulfilled.

### Brief Description of the Drawings

Fig. 1 is a concept diagram of a print system in Embodiment 1.
Fig. 2 is a block diagram of a print server device 1.
Fig. 3 is a diagram illustrating a flowchart for describing the operation of the print server device 1.
Fig. 4 is a data structure diagram of print object configuration information in a specific example.
Fig. 5 is a data structure diagram of component information.
Fig. 6 is a diagram illustrating a configuration example of a print object X.
Fig. 7 is a diagram illustrating a configuration example of a print object Y.
Fig. 8 is a data structure diagram of print layout information.
Fig. 9 is a diagram illustrating an example of the appearance of a server.
Fig. 10 is a diagram illustrating an example of an internal configuration of the server.
Fig. 11 is a block diagram of a print server device in Embodiment 2.
Fig. 12 is a flowchart describing an operation of the print server device.
Fig. 13 is a data structure diagram of component information.
Fig. 14 is a data structure diagram of a component image.

### Mode for Carrying Out the Invention

Hereinafter, embodiments of a print server device or the like will be described with reference to the drawings. Furthermore, in the embodiments, constituents or steps to which the same reference numerals are applied perform the same operations, and thus, the repeated description may be omitted.

### (Embodiment 1)

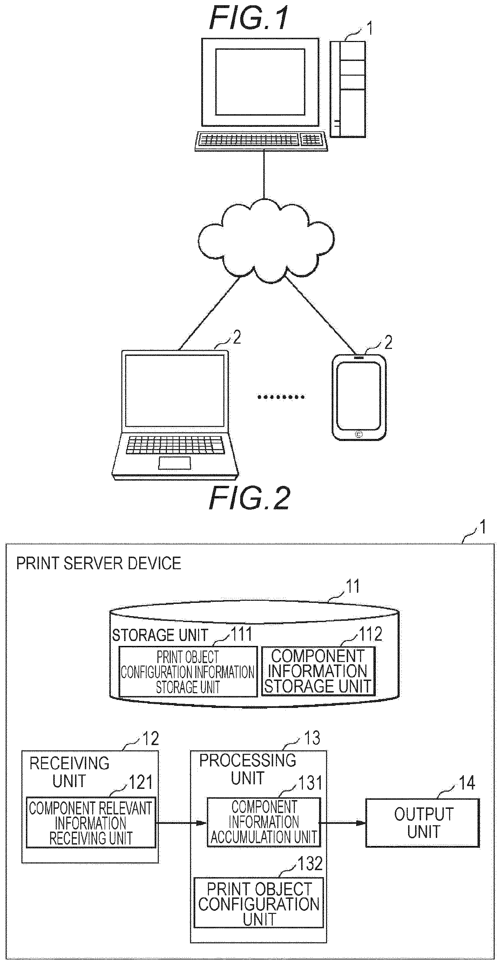

Fig. 1 is a concept diagram of a print system in this embodiment. The print system includes a print server device 1 and one or two or more terminal devices 2. The print server device 1 and each of one or more terminal devices 2 (hereinafter, simply referred to as a "terminal device 2"), for example, are connected to each other such that communication can be performed through a network such as a LAN or the internet, a communication line, and the like. The print server device 1, for example, is a server of a company that operates the print system, a cloud server, or the like, but the type is not limited. The terminal device 2, for example, is a PC, a tablet terminal, or the like of a user who uses the print system, but the type is not limited.

The outline of this print system will be described below. Each of one or more terminal devices 2 is capable of transmitting two or more instances of component information for configuring one print object at different times. The print object indicates contents that are printed by a printer, a print machine, or the like. The contents, for example, are print data for printing a photo book, a magazine, a catalog, a flyer, or the like, and include one or more types of information in images or texts. The image, for example, is image data such as a photo, an illustration, and a CG The print object may be one copy, or may be two or more copies. That is, even in the case of including two or more copies of print objects, the print objects may be simply referred to as a print object. In addition, the type or a data structure of the print object is not limited. Hereinafter, there is a case where each of two or more instances of information for configuring one print object (image data, text data, or the like) is referred to as "component information". Furthermore, the component information is information for configuring the print object. The component information, for example, is information indicating image data, text data, a page, a page group that is a collection of pages (for example, a chapter, an article, or the like), layout information, and an attribute value of the print object (for example, a color or the like), a code such as a QR code (Registered Trademark) or a bar code, shape information of a package or the like, a serial number, component designation information, and the like. The layout information, in general, is information for disposing the component information in the print object. The layout information may include information of the number of copies. The layout information may include a template. The template is information for configuring the background of a page of the print object. The template, for example, includes information of a print method such as a pattern configuring the background of the page, fixed parts disposed in the page, the size of the page, the type of paper to be printed, or a print mode. The layout information may include so-called order data. The order data is information for ordering the print object. The order data, for example, is data or the like for designating the number of copies, and the order of instances of data or pages of the component information included in each copy. In addition, the serial number, for example, is information or the like for determining a unique number of the print object or a generation algorithm of a serial number. The information for determining the generation algorithm of the serial number, for example, is a number to be increased (for example, "1"), an arithmetic equation, or the like. Further, the component designation information is information for designating a component, and for example, is a component identifier for identifying the component. Furthermore, the component information that is specified by the component designation information (for example, the image data, the text data, or the like), in general, is retained by the print server device. In addition, the print object may not be a final product by itself, and for example, may be only a part of pages of a brochure, or may be only a top cover of a box.

Transmitting at different times indicates that each of two or more instances of component information is transmitted to the print server device 1 at different timings. The terminal device 2, for example, previously transmits a part of the component information in two or more instances of component information, and subsequently transmits the remaining component information. A time from the transmission of certain component information to the transmission of the next component information, for example, may be several days or several months, and the length is not limited.

The print server device 1 receives two or more instances of component information for configuring one print object at different times, and configures a non-final print object by using one or more instances of component information that are on hand before all instances of component information for configuring one print object are on hand. Hereinafter, there is a case where processing of configuring the non-final print object as described above is referred to as "non-final print object configuration processing" or "partial configuration processing".

The print server device 1, for example, may execute the non-final print object configuration processing, with the case of receiving the component information as a trigger. In addition, the print server device 1 is also capable of configuring the final print object by using the newest non-final print object that is obtained by the non-final print object configuration processing (for example, a print object of which components other than a last component are on hand) and at least the last received component information.

The print object may include a fixed region and a variable region. The fixed region indicates a region in which the component information that is disposed is set as one instance of component information. The variable region indicates a region in which the component information that is disposed is set as any one of two or more instances of component information. The fixed region, for example, may be a region in which the template is disposed, and the variable region, for example, may be region in which the image data, the text data, or the like is disposed. That is, the fixed region and the variable region may partially overlap each other. For example, the variable region may exist in the fixed region, or the fixed region may exist in the variable region. The print server device 1 may execute the partial configuration processing in a case where the component information that is on hand is only the component information associated with the fixed region, and may not execute the partial configuration processing in the case of including partial information associated with the variable region. In addition, the print server device 1 is also capable of configuring two or more non-final print objects in which different instances of component information are disposed in the variable region in a case where two or more instances of component information associated with one variable region exist in the component information that is on hand.

The print server device 1 may perform the partial configuration processing or may not perform the partial configuration processing, in accordance with the print object. The print server device 1, for example, is also capable of automatically determining whether or not to perform the partial configuration processing, in accordance with an attribute value of the print object. Furthermore, in a case where the partial configuration processing is not performed, the print server device 1, in general, configures the print object of the final product in a case where all instances of component information necessary for the completion of one print object are on hand.

Fig. 2 is a block diagram of the print server device 1. The print server device 1 includes a storage unit 11, a receiving unit 12, a processing unit 13, and an output unit 14. The storage unit 11 includes a print object configuration information storage unit 111 and a component information storage unit 112. The receiving unit 12 includes a component relevant information receiving unit 121. The processing unit 13 includes a component information accumulation unit 131 and a print object configuration unit 132.

The storage unit 11 is capable of storing various instances of information. The various instances of information, for example, are print object configuration information, identification information for identifying the print server device 1 (for example, a MAC address, an IP address, or the like), the non-final print object described below, the final print object, a non-final print object configuration condition described below, and the like.

In the print object configuration information storage unit 111, the print object configuration information that is information for configuring the print object is stored. The print object configuration information includes a print object identifier for identifying one print object and two or more component identifiers for identifying the component information for configuring the print object that is identified by the print object identifier. Furthermore, the print object identifier may be information that is capable of identifying the print object, or may be a print object name, a number string, an alphabet string, or the like, but the print object identifier is not limited. In addition, the component identifier may be information that is capable of identifying the component, or may be a component name, a number string, an alphabet string, or the like, but the component identifier is not limited. In addition, one component identifier may be print object configuration information that appears a plurality of times, in one or two or more instances of print object configuration information.

In general, the print object configuration information further includes layout information indicating the layout of each of two or more instances of component information (the allocation of the pages), and one print object is configured on the basis of two or more instances of component information and the layout information. However, the layout information is not necessarily included in the print object configuration information, and for example, may be stored in the storage unit 11 in association with the print object relevant information. In addition, in the case of only arranging two or more instances of component information that are ordered, the layout information may not be necessary. Furthermore, a data structure or a specific example of the layout information will be described below.

The print object configuration information may include the attribute value of the print object. The attribute value indicates a value relevant to the properties of the print object or a value that is set with respect to the print object. The attribute value, for example, is the number of pages, the number of copies, information relevant to a delivery destination (for example, a delivery destination name, a delivery destination identifier, or the like), information indicating the type of print object (for example, a flyer, a magazine, or the like), information for designating a manufacturing plant, information for designating paper quality of the print object, information for designating the shape of the print object, information relevant to a print process (for example, the number of working processes and the presence or absence of a post-working process), and the like.

The component information storage unit 112 is capable of storing two or more instances of component information, in association with the print object identifier. The component information that is stored in the component information storage unit 112 may be information that is generated by the processing unit 13 described below.

The receiving unit 12 receives various instances of information. The various instances of information, for example, are component relevant information, information for membership registration with respect to this print system, information for giving out an order of the print object, and the like.

The component relevant information receiving unit 121 receives the component relevant information including the component identifier, and the component information that is identified by the component identifier. The component relevant information receiving unit 121 is capable of receiving each of two or more instances of component relevant information at different times. Receiving at different times indicates that each of two or more instances of component information is received from the terminal device 2 at different timings. The component relevant information receiving unit 121, for example, may sequentially receive two or more instances of component information, or may previously receive a part of the component information in two or more instances of component information, and may subsequently receive the remaining component information. Furthermore, it is obvious that the component relevant information receiving unit 121 may receive the component relevant information from two or more terminal devices 2, respectively, at different timings. In addition, a temporal interval in which the component relevant information receiving unit 121 receives the component relevant information, for example, may be 3 hours, 2 days, 3 weeks, or the like, and the length is not limited.

The processing unit 13 executes various processings. The various processings, for example, are the determination of whether or not the component relevant information receiving unit 121 receives the component relevant information, the reception of an operation for checking, configuration processing, and the like. The various processings, for example, are processing of generating the component information. The processing unit 13, for example, may generate code such as a QR code (Registered Trademark) or a bar code by using specific information (for example, the user identifier for identifying the user, the print object identifier, and the like), or may generate a unique print object identifier.

The component information accumulation unit 131 accumulates the component information included in the component relevant information that is received by the component relevant information receiving unit 121, in the component information storage unit 112, in association with the component identifier pairing up with the component information.

The print object configuration unit 132 configures the non-final print object by using one or more instances of component information that are stored in the component information storage unit 112, are identified by the print object identifier before all instances of component information that are associated with two or more component identifiers pairing up with the print object identifiers included in the print object configuration information and configure the print object identified by the print object identifier included in the print object configuration information are on hand. In the configuration, an image or a text based on one or more instances of component information is disposed in the page of the print object, and thus, the print object is in a state where print can be performed. The print object configuration unit 132 disposes one or more instances of component information, in general, in the page, in accordance with the layout information included in the print object configuration information, and thus, configures the non-final print object, and may use default layout information or may sequentially arrange one or more instances of component information that are ordered, and a method for configuring the non-final print object is not limited. Furthermore, the non-final print object, the print object of the final product, for example, is a PDF file, a job definition format (JDF), an image file, a file described in a script such as a Postscript, and the like, and the structure is not limited.

The print object configuration unit 132 may dispose the component information that is newly received on the non-final print object that is prepared in the past, in accordance with a position indicated by the layout information, and thus, may configure the non-final print object. The layout information, for example, includes the designation of the page in which the component information is disposed and the designation of the position in the page. Furthermore, in such a case, it is preferable that the print object configuration unit 132 allows the non-final print object that is prepared in the past not to remain. Allowing the non-final print object that is prepared in the past not to remain, for example, is deleting the non-final print object that is prepared in the past, overwriting a new non-final print object on the non-final print object that is prepared in the past, and the like.

In addition, the print object configuration unit 132 configures the final print object by using the non-final print object that is newly configured and the component information included in the component relevant information that is finally received by the component relevant information receiving unit 121. Furthermore, the print object configuration unit 132, in general, disposes the non-final print object that is newly configured, and all instances of component information that are received in advance and are not included in the non-final print object, in accordance with the layout information, and thus, configures the print object of the final product. Furthermore, the print object configuration unit 132 may not configure the print object of the final product. That is, the print object of the final product may be configured by the other device.

Before the component information is on hand indicates a period in which the final print object is not capable of being configured due to the missing of a part of the component information, but the non-final print object can be configured on the basis of the current component information, or a time point within such a period. Before the component information is on hand, for example, may be before the component relevant information receiving unit 121 receives the last component information, or may be before the component information accumulation unit 131 accumulates the last component information. However, before the component information is on hand may be any period or any time point while the component relevant information receiving unit 121 receives the last component information after receiving the initial component information.

The print object configuration unit 132 may determine whether or not to configure the non-final print object, on the basis of the non-final print object configuration condition. The non-final print object configuration condition is a condition for executing configuration processing of the non-final print object, and is information indicating a trigger for executing the configuration processing of the non-final print object. Furthermore, the contents of the non-final print object configuration condition are not limited.

The non-final print object configuration condition, for example, is the component information associated with two or more component identifiers pairing up with the print object identifiers included in the print object configuration information that is stored in the component information storage unit 112, and includes a condition in which at least one of the component information for configuring the print object that is identified by the print object identifier is received by the component relevant information receiving unit 121 or is stored in the component information storage unit 112 (may be referred to as a "first condition"). However, the first condition may be a condition in which a predetermined number or more (for example, two or more, three or more, ···) instances of component information in all instances of component information for configuring the print object that is identified by the print object identifier are received by the component relevant information receiving unit 121 or are stored in the component information storage unit 112. The contents of the first condition are not limited insofar as the first condition is a condition relevant to the number of instances of component information that is received by the component relevant information receiving unit 121 or the number of instances of component information that is stored in the component information storage unit 112, in the component information for configuring the print object that is identified by the print object identifier.

In addition, in a case where the print object includes the fixed region and the variable region, the non-final print object configuration condition may further include a second condition in which the component information included in the component relevant information that is received by the component relevant information receiving unit 121 is only the component information associated with the fixed region, in addition to the first condition. The non-final print object configuration condition may include only the second condition.

Alternatively, in a case where the print object includes the fixed region and the variable region, the non-final print object configuration condition may further include a third condition in which there are two or more instances of component information associated with one variable region in the component information included in the component relevant information that is received by the component relevant information receiving unit 121, in addition to the first condition. The non-final print object configuration condition may include only the third condition.

For example, in a case where the non-final print object configuration condition includes only the first condition, the print object configuration unit 132 may determine that the non-final print object configuration condition is satisfied in a case where at least one of the component information for configuring the print object that is identified by the print object identifier is stored in the component information storage unit 112, and may determine that the non-final print object configuration condition is not satisfied in a case where no component information is stored in the component information storage unit 112. This will be described in Specific Example 1.

In addition, for example, in a case where the non-final print object configuration condition includes the first condition and the second condition, the print object configuration unit 132 may determine that the non-final print object configuration condition is satisfied in a case where at least one of the component information for configuring the print object that is identified by the print object identifier is stored in the component information storage unit 112, and the component information included in the component relevant information that is received by the component relevant information receiving unit 121 is only the component information associated with the fixed region. On the other hand, in a case where no component information for configuring the print object that is identified by the print object identifier is stored, or the component information included in the component relevant information that is received by the component relevant information receiving unit 121 is only the component information associated with the variable region, or includes both of the component information associated with the fixed region and component information associated with the variable region, the print object configuration unit 132 may determine that the non-final print object configuration condition is not satisfied. This will be described in Specific Example 2.

Alternatively, for example, in a case where the non-final print object configuration condition includes the first condition and the third condition, the print object configuration unit 132 may determine that non-final print object configuration condition is satisfied in a case where at least one of the component information for configuring the print object that is identified by the print object identifier is stored in the component information storage unit 112, and there are two or more instances of component information associated with the variable region, in the component information included in the component relevant information that is received by the component relevant information receiving unit 121. On the other hand, in a case where no component information for configuring the print object that is identified by the print object identifier is stored, or there is no component information associated with the variable region, or there is only one instance of component information associated with the variable region, in the component information included in the component relevant information that is received by the component relevant information receiving unit 121, the print object configuration unit 132 may determine that the non-final print object configuration condition is not satisfied. This will be described in Specific Example 3.

In addition, in a case where the print object includes two or more pages, the non-final print object configuration condition may further include a fourth condition relevant to the number of non-final pages or final pages, in addition to the first condition. The non-final page indicates a page in which the component information to be disposed is not on hand (there is no component information, or one or two or more instances of component information are missing). The fourth condition, for example, is a condition in which the non-final print object is configured by using one or more instances of component information that are stored in the component information storage unit 112, in a case where the non-final page is only one page. Furthermore, the non-final print object configuration condition may include only the fourth condition.

For example, in a case where the non-final print object configuration condition includes the first condition and the fourth condition, the print object configuration unit 132 may determine that the non-final print object configuration condition is satisfied, at a time point when the number of non-final pages is only one page, and may configure the non-final print object by using one or more instances of component information that are stored in the component information storage unit 112 and layout information 2 that is stored in the print object configuration information storage unit 111. This will be described in Specific Example 4.

In addition, in a case where the print object configuration information includes the attribute value of the print object, the non-final print object configuration condition may include a fifth condition relevant to the attribute value of the print object. The attribute value, for example, is the number of pages, and the fifth condition in a case where the attribute value is the number of pages, for example, is a condition in which the non-final print object is configured in a case where the total number of pages of the print object is a threshold value or more or in a case where the total number of pages is greater than the threshold value. Furthermore, the threshold value, for example, is "2", and in a case where the total number of pages is 2 or more, the non-final print object is configured.

For example, in a case where the non-final print object configuration condition includes the fifth condition, in a case where the total number of pages of the print object is the threshold value or more, the print object configuration unit 132 may determine that the fifth condition is also satisfied, and thus, may configure the non-final print object, and in a case where the total number of pages of the print object is less than the threshold value, the print object configuration unit 132 may determine that the fifth condition is not satisfied, and may not perform the processing of configuring the non-final print object. This will be described in Specific Example 5.

The non-final print object configuration condition may be a condition other than the conditions relevant to the print object described above. The non-final print object configuration condition may be a condition that an instruction is received from the external device such as the terminal device 2. In addition, the non-final print object configuration condition, for example, may be a condition relevant to the print server device. The condition relevant to the print server device, for example, indicates that a load on the print server device decreases as the condition set in advance is satisfied (for example, CPU power is used only at the threshold value or less) or the number of users who log in the print server device is the threshold value or less. In addition, the non-final print object configuration condition may be a condition relevant to a time. The condition relevant to the time, for example, indicates that the current is a time zone set in advance, the current time is a time set in advance, or a delivery deadline of the print object comes in a predetermined time period from the current date set. In addition, the non-final print object configuration condition, for example, may be a condition relevant to the operation of the user. The condition relevant to the operation of the user, for example, indicates that there is no operation during a threshold time after there is any operation from the user (the terminal device 2), or there is no operation set in advance during the threshold time after there is a operation set in advance from the user (the terminal device 2).

The output unit 14 outputs the non-final print object that is configured by the print object configuration unit 132. In addition, the output unit 14 also outputs the final print object that is configured by the print object configuration unit 132. The output, for example, is a concept including a displaying with respect to a display, an accumulating with respect to a recording medium, a transmitting with respect to an external device (a server of a print plant, and the like), a delivering of a processing result with respect to other processing devices, other programs, or the like, and the like. The output unit 14, in general, may display the non-final print object or the final print object on the display, may accumulate the non-final print object or the final print object in the recording medium, or may transmit the non-final print object or the final print object to the external device, but for example, may print the non-final print object or the final print object by a printer, and an output mode is not limited.

It is preferable that the storage unit 11, the print object configuration information storage unit 111, and the component information storage unit 112, for example, are a non-volatile recording medium such as a hard disk or a flash memory, and the storage unit 11, the print object configuration information storage unit 111, and the component information storage unit 112 can also be fulfilled by a volatile recording medium. In addition, a procedure of storing the various instances of information described above in the storage unit 11 or the like is not limited. For example, information may be stored in the storage unit 11 or the like through a detachable recording medium such as a CD-ROM or a memory card, information that is transmitted through a network, a communication line, or the like may be stored in the storage unit 11 or the like, or information that is input through an input device such as a keyboard or a mouse may be stored in the storage unit 11 or the like.

The receiving unit 12 and the component relevant information receiving unit 121, in general, are fulfilled by a communication module such as a network card, and may be fulfilled by a module for receiving broadcasting. That is, the receiving unit 12 and the component relevant information receiving unit 121 can be fulfilled by a wired or wireless communication means or a broadcasting receiving means.

The processing unit 13, the component information accumulation unit 131, and the print object configuration unit 132, in general, can be fulfilled by an MPU, a memory, or the like. A processing procedure of the processing unit 13 or the like, in general, is fulfilled by software, and the software is recorded in a recording medium such as an ROM. However, the processing procedure may be fulfilled by hardware (a dedicated communication circuit).

The output unit 14 may be considered as including or not including an output device such as a display. The output unit 14 can be fulfilled by driver software of the output device, or the output device and the driver software of the output device, and the like.

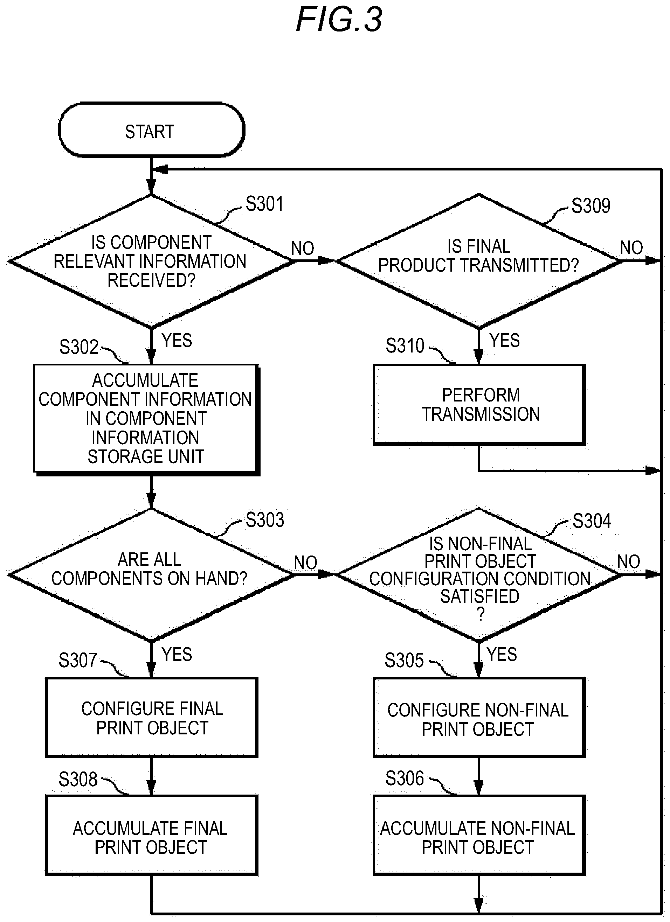

Next, the operation of the print server device 1 will be described by using a flowchart of Fig. 3.

(Step S301) The processing unit 13 determines whether or not the component relevant information receiving unit 121 receives the component relevant information from the terminal device 2. In a case where it is determined that the component relevant information receiving unit 121 receives the component relevant information from the terminal device 2, the process proceeds to Step S302, and in a case where it is determined that the component relevant information receiving unit 121 does not receive the component relevant information from the terminal device 2, the process proceeds to Step S309.

(Step S302) The component information accumulation unit 131 accumulates the component information included in the component relevant information that is received by the component relevant information receiving unit 121 in the component information storage unit 112, in association with the component identifier pairing up with the component information.

(Step S303) The print object configuration unit 132 determines whether or not all instances of component information that configure the print object identified by the print object identifier and are associated with two or more component identifiers pairing up with the print object identifiers included in the print object configuration information that is stored in the print object configuration information storage unit 111 are on hand. Specifically, in a case where all instances of component information associated with two or more component identifiers pairing up with the print object identifiers included in the print object configuration information are stored in the component information storage unit 112, the print object configuration unit 132 determines that all instances of component information are on hand, and in a case where none of the component information is stored or only a part of the component information is stored in the component information storage unit 112, the print object configuration unit 132 determines that the component information is not on hand. In a case where it is determined that all instances of component information are on hand, the process proceeds to Step S307, and in a case where it is determined that all instances of component information are not on hand, the process proceeds to Step S304.

(Step S304) The print object configuration unit 132 determines whether or not the non-final print object configuration condition is satisfied. The non-final print object configuration condition has been described by using the block diagram described above, and the description thereof overlaps with the description of a specific example described below, and thus, the repeated description will be omitted. In a case where it is determined that non-final print object configuration condition is satisfied, the process proceeds to Step S305, and in a case where it is determined that non-final print object configuration condition is not satisfied, the process returns to Step S301.

(Step S305) The print object configuration unit 132 configures the non-final print object by using one or more instances of component information that configure the print object identified by the print object identifier and are stored in the component information storage unit 112. Desirably, the print object configuration unit 132 configures the non-final print object by using the newly configured non-final print object and at least the last received component information. The print object configuration unit 132, for example, disposes all instances of component information that are received in advance and are not included in the non-final print object, on the newly configured non-final print object, in accordance with the layout information, and thus, configures the non-final print object.

Furthermore, in a case where there are two or more instances of component information associated with the variable region, in the component information included in the component relevant information that is received by the component relevant information receiving unit 121, the print object configuration unit 132 may configure two or more non-final print objects in which each of two or more instances of component information is disposed in the variable region, for each of the two or more instances of component information.

(Step S306) The output unit 14 accumulates the non-final print object that is configured by the print object configuration unit 132, for example, in the storage unit 11. However, the output unit 14 may output the non-final print object, for example, through the output device such as the display. After that, the process returns to Step S301.

(Step S307) The print object configuration unit 132 configures the final print object by using all instances of component information that configure the print object identified by the print object identifier and are stored in the component information storage unit 112. Desirably, the print object configuration unit 132 configures the final print object by using the newly configured non-final print object and at least the last received component information.

(Step S308) The output unit 14 accumulates the final print object that is configured by the print object configuration unit 132, for example, in the storage unit 11. However, the output unit 14 may output the final print object, for example, through the output device such as the display. After that, the process returns to Step S301.

(Step S309) The processing unit 13 determines whether or not the final print object is transmitted. According to the determination result, for example, it is determined that the final print object is transmitted, as the final print object is accumulated in the storage unit 11 or in accordance with a transmission request from the terminal device 2. However, a trigger for transmitting the final print object is not limited. In a case where it is determined that the final print object is transmitted, the process proceeds to Step S310, and in a case where it is determined that the final print object is not transmitted, the process returns to Step S301.

(Step S310) The output unit 13 acquires the final print object from the storage unit 11, and transmits the final print object to the terminal device 2. After that, the process returns to Step S301.

Furthermore, the processing according to the flowchart of Fig. 3, for example, is started as a power source is turned on or a program is activated, and is ended as the power source is turned off or the program is ended.

Furthermore, the processing illustrated in the flowchart of Fig. 3 is processing in a case where the print object configuration information associated with one print object is stored in the print object configuration information storage unit 111, and in a case where the print object configuration information associated with two or more print objects is stored in the print object configuration information storage unit 111, the same processing may be performed two or more times in parallel or in a time-division manner.

Hereinafter, a specific operation example of the print system in this embodiment will be described. Furthermore, the following description is merely an example, various changes can be performed, and the invention is not limited.

A concept diagram of the print system is Fig. 1. The print server device 1, for example, is operated by an operator of a company that operates the print system. The terminal device 2, for example, is operated by a publisher that uses the print system or a home user.

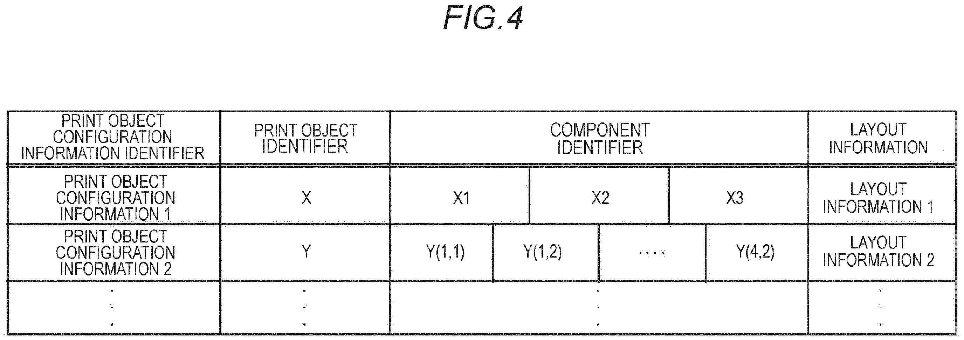

A block diagram of the print server device 1 is Fig. 2. In the print object configuration information storage unit 111, one or more instances of print object information are stored. One or more instances of print object information, for example, are print object configuration information 1, print object configuration information 2, ···, as illustrated in Fig. 4. The print object configuration information 1 includes a print object identifier "X" for identifying a print object X, component identifiers "X1", "X2", and "X3" for identifying three instances of component information for configuring the print object X, and layout information 1 described below. Furthermore, the component identifier "Xi" indicates the i-th component of the print object X (i is a natural number).

The print object configuration information 2 includes a print object identifier "Y" for identifying a print object Y, component identifiers "Y(1,1)", "Y(1,2)", "Y(2,1)", ···, and "Y(4,2)" for identifying eight instances of component information for configuring the print object Y, and layout information 2 described below. Furthermore, the component identifier "Y(j,i)" indicates the i-th component of the j-th page of the print object Y (j and i are a natural number). Furthermore, the print object configuration information 2 is four pages, and is information for configuring the print object including eight instances of component information. However, this is for the convenience of the description, and it is preferable that the print object configuration information 2 includes a plurality of pages such as several hundreds, several thousands, several tens of thousands, and several hundreds of thousands, and is information for configuring the print object including several hundreds or more (for example, tens of millions) instances of component information.

The print object X, for example, is a one-side printed flyer, and includes three instances of component information pairing up with the component identifiers "X1", "X2", and "X3". The print object Y, for example, is a pamphlet including four pages, and includes eight instances of component information pairing up with the component identifiers "Y(1,1)", "Y(1,2)", ···, and "Y(4,2)". Specifically, the first page of the print object Y includes two instances of component information pairing up with the component identifiers "Y(1,1)" and "Y(1,2)", and the fourth page includes two instances of component information Y(4,1)" and "Y(4,2).

The print object configuration information 1, the print object configuration information 2, ···, for example, are also stored in the recording medium of the terminal device 2 (hereinafter, may be referred to as a "terminal storage unit"). In addition, in the terminal storage unit, the component information pairing up with the component identifier "X1" (for example, a text file that is identified by a file identifier "AAA.txt"), the component information pairing up with a component identifier "X2" (for example, an image file that is identified by a file identifier "BBB.jpg"), and the component information pairing up with the component identifier "X3" (for example, a text file that is identified by a file identifier "CCC.txt") are stored.

In addition, in the terminal storage unit, the component information pairing up with the component identifier "Y(1,1)" (for example, a text file that is identified by a file identifier "aaa.txt"), the component information pairing up with the component identifier "Y(1,2)" (for example, an image file that is identified by a file identifier "bbb.jpg"), the component information pairing up with the component identifier "Y(2,1)" (for example, a text file that is identified by a file identifier "ccc.txt"), ···, and the component information pairing up with the component identifier "Y(4,2)" (for example, an image file that is identified by a file identifier "hhh.jpg") are stored.

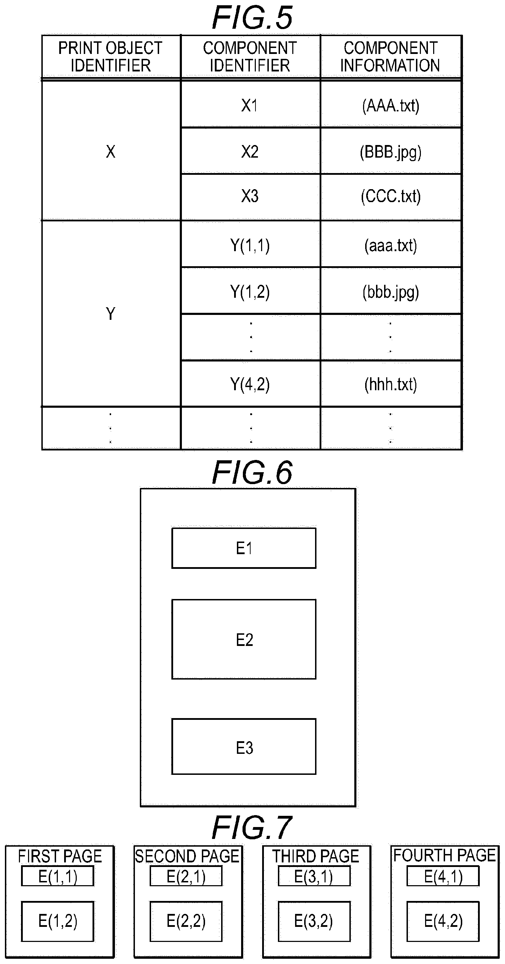

In the component information storage unit 112, two or more component identifiers pairing up with the print object identifiers included in each of one or more instances of print object information that is stored in the print object configuration information storage unit 111 are stored. One or more instances of print object information that are stored in the print object configuration information storage unit 111 are the print object configuration information 1, the print object configuration information 2, ··· described above. Two or more component identifiers pairing up with the print object identifiers included in each of one or more instances of print object information, for example, are the component identifiers "X1", "X2", and "X3" pairing up with the print object identifiers X, and the component identifiers "Y(1,1)", "Y(1,2)", ···, and "Y(4,2)" pairing up with the print object identifiers Y, as illustrated in Fig. 5. The component information storage unit 112 is capable of storing the component information pairing up with two or more component identifiers, but none of the component information is stored in the component information storage unit 112 yet.

The print object X includes three regions associated with the component identifiers "X1", "X2", and "X3" described above. Three regions, for example, are regions E1, E2, and E3 illustrated in Fig. 6. In addition, the print object Y includes eight regions associated with the component identifiers described above. Eight regions, for example, are regions E(1,1), E(1,2), ···, and E(4,2) illustrated in Fig. 7. Furthermore, all of the illustrated regions are a rectangular region, but for example, the region may be a circular region or the like, and the shape of the region is not limited.

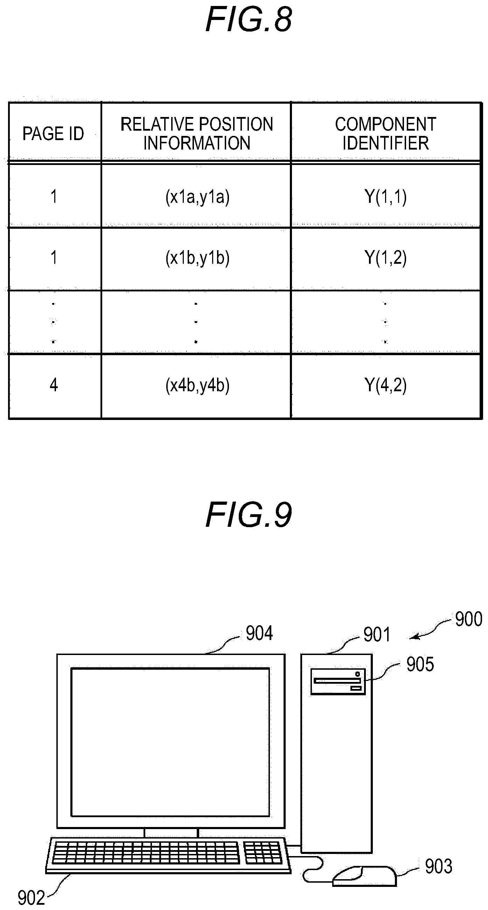

The layout information included in the print object configuration information, for example, as illustrated in Fig. 8, includes two or more sets of a page ID, relative position information, and the component identifier. Furthermore, the number of sets of the page ID, the relative position information, and the component identifier (the number of sets) is associated with the number of instances of component information for configuring the print object pairing up with the print object configuration information. Being associated, in general, indicates that the number of instances of component information is identical to the number of sets, but the number of instances of component information may be different from the number of sets.

The page ID is an identifier for identifying the page. The page ID, for example, is a page number such as 1, 2, ···, but is not limited insofar as the page ID is information that is capable of identifying the page. The relative position information is information indicating a relative position of the component information in the page. The relative position information, for example, is expressed by the form of coordinates (x,y) of a center point of a region in which the component information is disposed. However, for example, in a case where the region is a rectangular region, the relative position information may be expressed by start point coordinates (upper left coordinates) and end point coordinates (lower right coordinates) of the region, and the expression form of the relative position information is not limited.

In Fig. 8, the layout information 2 included in the print object configuration information 2 associated with the print object Y is exemplified. The print object Y includes eight instances of component information, and thus, the layout information 2 includes eight sets of the page ID, the relative position information, and the component identifier. Eight sets in the layout information 2 are a set of a page ID "1", relative position information "(xla,yla)", and the component identifier "Y(1,1)", a set of the page ID "1", relative position information "(xlb,ylb)", and the component identifier "Y(1,2)", a set of a page ID "2", relative position information "(x2a,y2a)", and the component identifier "Y(2,1)", ···, and a set of a page ID "4", relative position information "(x4b,y4b)", and the component identifier "Y(4,2)".

### (Specific Example 1)

Specific Example 1 is an operation example in the case of configuring the print object X. The non-final print object configuration condition in Specific Example 1 is a condition in which the non-final print object is configured by using one or more instances of component information that are stored in the component information storage unit 112 in a case where there is only one instance of component information that is not stored, in all instances of component information for configuring the print object (the first condition).

The terminal device 2 transmits component relevant information 1 including the component identifier "X1" and component information "AAA.txt", component relevant information 2 including the component identifier "X2" and component information "BBB.jpg", and component relevant information 3 including the component identifier "X3" and component information "CCC.txt" to the print server device 1, at different times. For example, the component relevant information 1 is transmitted first in the morning of one day, and then, the component relevant information 3 is transmitted, and the component relevant information 2 is transmitted in the afternoon of the day.

In a case where the component relevant information 1 is transmitted from the terminal device 2, in the print server device 1, the component relevant information receiving unit 121 receives the component relevant information 1, and the component information accumulation unit 131 accumulates the component information "AAA.txt" included in the component relevant information 1 in the component information storage unit 112, in association with the component identifier "X1". The print object configuration unit 132 determines that the component information is not on hand since the component information associated with the component identifier "X2" and the component information associated with the component identifier "X3" are not stored in the component information storage unit 112 yet, and further determines whether or not the non-final print object configuration condition is satisfied. Furthermore, the method of the print object configuration unit 132 of determining that the component information is on hand or determining that the component information is not on hand is not limited. In a case where there are all instances of component information that are prescribed in the layout information of the print object, in the component information storage unit 11, the print object configuration unit 132 may determine that the component information is on hand, with reference to the layout information of the storage unit 11. In addition, in a case where there are all instances of component information that are defined in the order data including the information for configuring the print object, in the component information storage unit 11, the print object configuration unit 132 may determine that the component information is on hand, with reference to the order data that is received from the external device (for example, the terminal device 2). The print object configuration unit 132 may determine whether or not the component information is on hand, with reference to information other than the component information, such as the layout information or the order data.

There are two instances of component information that are not stored, at this time point, and thus, the print object configuration unit 132 determines that the non-final print object configuration condition is not satisfied, and does not configure the non-final print obj ect.

Subsequently, in a case where the component relevant information 3 is transmitted from the terminal device 2, in the print server device 1, the component relevant information receiving unit 121 receives the component relevant information 3, and the component information accumulation unit 131 accumulates the component information "CCC.txt" included in the component relevant information 3 in the component information storage unit 112, in association with the component identifier "X3". The print object configuration unit 132 determines that the component information is not on hand since the component information associated with the component identifier "X2" is not stored in the component information storage unit 112 yet, and further determines whether or not the non-final print object configuration condition is satisfied.

There is only one instance of component information that is not stored, at this time point, and thus, the print object configuration unit 132 determines that the non-final print object configuration condition is satisfied, and configures the non-final print object by using two instances of component information "AAA.txt" and "CCC.txt" that are stored in the component information storage unit 112, and the layout information 1 that is stored in the print object configuration information storage unit 111. Specifically, the print object configuration unit 132 configures the non-final print object by disposing a text based on the component information "AAA.txt" (for example, a caption of "the first sunrise from Mount OO") in the region E1, and by disposing a text based on the component information "CCC.txt" (for example, a sentence of "this is a photo taken at the shore of Lake OO ···") in the region E3, with respect to the page including the regions E1 to E3 illustrated in Fig. 6, and accumulates the non-final print object in the storage unit 11.

The output unit 14 outputs the non-final print object that is stored in the storage unit 11 through the output device such as the display. Accordingly, for example, a print image of the non-final print object is displayed on the display. The operator of the print server device 1 is capable of checking the non-final print object while watching the print image on the display.

As described above, the non-final print object is configured by using one or more instances of component information that have been stored, and is output, at a time point when there is only one instance of component information that are not stored (or that is not received: the same applies to the followings), and thus, the operator is capable of starting a checking operation before the print object is completed.

After that, in a case where the component relevant information 2 is transmitted from the terminal device 2, in the print server device 1, the component relevant information receiving unit 121 receives the component relevant information 2, and the component information accumulation unit 131 accumulates the component information "BBB.jpg" included in the component relevant information 2 in the component information storage unit 112, in association with the component identifier "X2". The component information "AAA.txt" associated with the component identifier "X1", the component information "BBB.jpg" associated with the component identifier "X2", and the component information "CCC.txt" associated with the component identifier "X3" are stored in the component information storage unit 112, and thus, the print object configuration unit 132 determines that all instances of component information are on hand, and configures the final print object by using the non-final print object that is stored in the storage unit 11, and the last received component information "BBB.jpg" of the component relevant information receiving unit 121. Specifically, the print object configuration unit 132 configures the final print object by disposing an image based on the component information "BBB.jpg" associated with the component identifier "X2" in the region E2 included in the non-final print object, and accumulates the final print object in the storage unit 11.

As described above, it is possible to reduce a time until the print object of the final product is configured after all components for completing the print object are on hand, by using the non-final print object configured at the time point when there is only one instance of component information that are not stored, and one instance of the last received component information.

In general, the non-final print object configuration condition may be a condition in which the non-final print object is configured by using one or more instances of component information that are stored in the component information storage unit 112 in a case where the number of instances of component information that are not stored is i or less (i is a natural number that is less than the total number of instances of component information for configuring the print object X, and in this example, the total number of component information is 3, and thus, i = 1 or i = 2). In this case, the print object configuration unit 132 configures the non-final print object (the first manuscript) by using one or more instances of component information that have been stored, at a time point when the number of instances of component information that are not stored is i, and the output unit 14 outputs the non-final print object, and thus, the operator is capable of starting the checking operation before the print object is completed.

Hereinafter, the print object configuration unit 132 configures the new non-final print object (the second manuscript) by using the newly configured non-final print object (in this example, the first manuscript), and the last received component information (in this example, the second component information), and the output unit 14 outputs the new non-final print object, every time when the component relevant information receiving unit 121 receives new component relevant information, during a period until the number of instances of component information that are not stored is one less than the total number of instances of component information for configuring the print object X (in this example, 3 - 1 = 2). Accordingly, the operator is capable of performing the checking operation, as the component information is received.

Then, when the last (in this example, the third) component information is received, the print object configuration unit 132 configures the final print object by using the newly configured non-final print object (the newest manuscript: in this example, the second manuscript), and the last component information, and the output unit 14 outputs the final print object. Even in such a case, it is possible to reduce a time until the print object of the final product is configured after all components for completing the print object are on hand.

Furthermore, the threshold value i of the non-final print object configuration condition described above may be variable. In this case, for example, the processing unit 13 may receive the numeric input of the operator through the input device such as a keyboard, and the print object configuration unit 132 may set the input value in the threshold value i of the non-final print object configuration condition, and may configure the non-final print object. Accordingly, a timing when the checking operation can be started is changed in accordance with the threshold value i, and thus, the operator, for example, is capable of more rapidly starting the checking operation by increasing the threshold value i. Furthermore, the processing unit 13 may determine the threshold value i, in accordance with the attribute value of the print object (for example, the number of pages, the number of copies, and the like). The processing unit 13, for example, may determine the threshold value i by an increasing function having the attribute value of the print object as a parameter.

Alternatively, the non-final print object configuration condition, for example, may be a condition in which non-final print object is configured by using one or more instances of component information that are stored in the component information storage unit 112 in a case where the number of instances of component information that have been received is j or more (j is a natural number that is less than the total number of instances of component information for configuring the print object X, and in this example, j = 1 or j = 2). In this case, when the j-th component information is received, the print object configuration unit 132 configures the non-final print object (the first manuscript) by using the component information, and the output unit 14 outputs the non-final print object, and thus, the operator is capable of starting the checking operation before the print object is completed.

In addition, when the {j+1}-th component information is received, the print object configuration unit 132 configures the new non-final print object (the second manuscript) by using the previously configured non-final print object (the first manuscript), and the {j+1}-th component information, and the output unit 14 outputs the new non-final print obj ect.

Hereinafter, the print object configuration unit 132 configures the new non-final print object (the second manuscript) by using the newly configured non-final print object (in this example, the first manuscript), and the last received component information (in this example, the second component information), and the output unit 14 outputs the new non-final print object, every time when the component relevant information receiving unit 121 receives the new component relevant information, during a period until the number of instances of component information that have been received is one less than the total number of instances of component information for configuring the print object X (in this example, 3 - 1 = 2). Accordingly, the operator is capable of performing the checking operation, as the component information is received.

Then, when the last (in this example, the third) component information is received, the print object configuration unit 132 configures the final print object by using the newly configured non-final print object (in this example, the second manuscript), and the last component information, and the output unit 14 outputs the new non-final print object. Even in such a case, it is possible to reduce a time until the configuration of a final product is finished after all instances of component information are on hand.

### (Specific Example 2)

Specific Example 2 is another operation example in the case of configuring the print object X. Furthermore, the description of operations that overlap with the preceding specific example may be omitted or simplified (the same applies to the followings).

In this example, the print object includes the fixed region and the variable region. The non-final print object configuration condition in this example further includes a condition in which the component information included in the component relevant information that is received by the component relevant information receiving unit 121 is only the component information associated with the fixed region (the second condition), in addition to the first condition in Specific Example 1.

For example, in the print object X illustrated in Fig. 6, the regions E1 and E2 are the fixed region, and the region E3 is the variable region. Then, for example, there are two or more types of instances of component information 3a, 3b, ··· such as a sentence for general readers and a sentence for children, as component information 3 associated with the region E3 that is the variable region.

In a case where the component relevant information 1 and the component relevant information 3a are sequentially transmitted from the terminal device 2, in the print server device 1, the print object configuration unit 132 determines that the first condition is satisfied, at a time point when the component relevant information 1 is received, and the component relevant information 3a is received. However, the latter component relevant information 3 is associated with the variable region, and thus, the print object configuration unit 132 determines that the second condition is not satisfied, and does not perform the processing of configuring the non-final print object.

In contrast, in a case where the component relevant information 1 and the component relevant information 2 are sequentially transmitted from the terminal device 2, in the print server device 1, the print object configuration unit 132 determines that the first condition is satisfied, at a time point when the component relevant information 1 is received, and the component relevant information 2 is received. In addition, the any component information that is received is associated with the fixed region, and thus, the print object configuration unit 132 determines that the second condition is also satisfied, and configures the non-final print object.

In a case where the component information included in the received component relevant information includes the component information associated with the variable region, there is a possibility that another instance of component information associated with the variable region is sent later, and the non-final print object is required to be configured again, but in this example, only in a case where the component information included in the received component relevant information is only the component information associated with the fixed region, the non-final print object can be configured.

### (Specific Example 3)

Specific Example 3 is another operation example in the case of configuring the print object X. In this example, the print object includes the fixed region and the variable region. In addition, in the print object X illustrated in Fig. 6, the regions E1 and E2 are the fixed region, and the region E3 is the variable region. Then, for example, there are two or more types of instances of component information 3a, 3b, ··· such as a sentence for general readers and a sentence for children, as component information 3 associated with the region E3 that is the variable region.

The non-final print object configuration condition in this example further includes a condition in which there are two or more instances of component information associated with the variable region, in the component information included in the component relevant information that is received by the component relevant information receiving unit 121 (the third condition), in addition to the first condition in Specific Example 1.

In a case where the component relevant information 1 and the component relevant information 3a are sequentially transmitted from the terminal device 2, in the print server device 1, the print object configuration unit 132 determines that the first condition is satisfied, at a time point when the component relevant information 1 is received, and the component relevant information 3a is received. However, there is only the component relevant information 3a that is associated with the variable region, in the component information included in the component relevant information that is received by the component relevant information receiving unit 121, and thus, the print object configuration unit 132 determines that the third condition is not satisfied, and does not perform the processing of configuring the non-final print object.

After that, in a case where the component relevant information 3b is transmitted from the terminal device 2, in the print server device 1, the print object configuration unit 132 determines that the first condition is satisfied, and the second condition is also satisfied, at a time point when the component relevant information 3b is received. Then, the print object configuration unit 132 configures the non-final print object in which a text based on the component information 3a is disposed in the region E3 that is the variable region (a version for general readers) and the non-final print object in which a text based on the component information 3b is disposed in the region E3 (a version for children), and the output unit 14 outputs images of two types of non-final print objects that are configured by the print object configuration unit 132. As described above, two types or two or more types of non-final print objects in which different instances of component information are disposed in the variable region are configured and output, and thus, the operator is capable of performing an emendation operation for each two or more types of non-final print obj ects.

### (Specific Example 4)

Specific Example 4 is an operation example in the case of configuring the print object Y. The non-final print object configuration condition in this example is a condition in which the non-final print object is configured by using one or more instances of component information that are stored in the component information storage unit 112 in a case where the non-final page includes only one page (in general, k or less pages: k is a natural number that is less than the total number of pages of the print object Y, and in this example, the total number of pages is 4, and thus, any one of i = 1, i = 2, and i = 3) (the fourth condition).

The terminal device 2 transmits component relevant information (1,1) including the component identifier "Y(1,1)" and component information "aaa.txt", component relevant information (1,2) including the component identifier "Y(1,2)" and component information "bbb.jpg", component relevant information (2,1) including the component identifier "Y(2,1)" and component information "ccc.txt", ···, and component relevant information (4,2) including the component identifier "Y(4,2)" and component information "hhh.jpg", at different times. For example, the terminal device 2 sequentially transmits six instances of component relevant information (1,1) to (3,2) in the morning of one day, and transmits two instances of component relevant information (4,1) and (4,2) in the afternoon of the day.

In a case where the component relevant information (1,1) is transmitted from the terminal device 2, in the print server device 1, the component relevant information receiving unit 121 receives the component relevant information (1,1), and the component information accumulation unit 131 accumulates the component information "aaa.txt" included in the component relevant information 1 in the component information storage unit 112, in association with the component identifier "Y(1,1)". The print object configuration unit 132 determines that the component information is not on hand since seven instances of component information associated with the component identifiers "Y(1,2)" to "Y(4,2)" are not stored in the component information storage unit 112 yet, and further determines whether or not the non-final print object configuration condition is satisfied.

The number of non-final pages is eight pages, at this time point, and thus, the print object configuration unit 132 determines that the non-final print object configuration condition is not satisfied, and does not configure the non-final print object.

Hereinafter, six instances of component relevant information (1,2) to (3,2) are sequentially transmitted from the terminal device 2, and in the print server device 1, the component relevant information receiving unit 121 sequentially receives the component relevant information (1,2) to (3,2), and the component information accumulation unit 131 sequentially accumulates the component information "bbb.jpg" to "fff.jpg" included in the component relevant information (1,2) to (3,2) in the component information storage unit 112, in association with the component identifiers "Y(1,2)" to "Y(4,2)".

Then, the number of non-final pages is only one page, at a time point when the component information "fff.jpg" included in the sixth component relevant information (3,2) is accumulated in the component information storage unit 112, in association with the component identifier "Y(3,2)", and thus, the print object configuration unit 132 determines that the non-final print object configuration condition is satisfied, and configures the non-final print object by using seven instances of component information "aaa.txt" to "fff.jpg" that are stored in the component information storage unit 112, and the layout information 2 that is stored in the print object configuration information storage unit 111.

Specifically, in the first page including two regions E(1,1) and E(1,2) illustrated in Fig. 7, the print object configuration unit 132 configures the final first page by disposing a text based on the component information "aaa.txt" in the region E(1,1) associated with relative position information (xla,yla), and by disposing an image based on the component information "bbb.jpg" in the region E(1,2) associated with the relative position information (xlb,ylb). The print object configuration unit 132 also configures the final second page and the final third page, in the same procedure.

The print object configuration unit 132 accumulates the non-final print object including the first page to the third page that are completed as described above, and the fourth page that is not completed (the first manuscript) in the storage unit 11. The output unit 14 outputs the non-final print object that is stored in the storage unit 11 through the output device such as the display. Accordingly, for example, the print image of the non-final print object is displayed on the display. In this case, the output unit 14, for example, may output all pages included in the non-final print object that is stored in the storage unit 11, or may output only the final page and may not output the non-final page. Alternatively, the output unit 14 may output the final page, and a page in which one or more instances of component information are disposed in the non-final page, and may not output a page in which no component information is disposed. The operator is capable of performing the emendation of the non-final print object while watching the print image on the display. The processing unit 13 receives the operation for emendation through the input device, and performs the configuration processing on the non-final print object that is stored in the storage unit 11.

As described above, the non-final print object is configured by using one or more instances of component information that have been stored, and is output, at a time point when there is one non-final page left, and thus, the operator is capable of starting the checking operation before the print object is completed.

After that, in a case where the seventh component relevant information (4,1) is transmitted from the terminal device 2, in the print server device 1, the component relevant information (4,1) is received, and the component information "ggg.txt" included in the component relevant information (4,1) is accumulated in the component information storage unit 112, in association with the component identifier "Y(4,1)". There is one non-final page left, and thus, the print object configuration unit 132 configures the new non-final print object (the second manuscript) by disposing the component information "ggg.txt" in the region E(4,1) of the fourth page included in the non-final print object (the first manuscript) that is stored in the storage unit 11, and outputs the new non-final print object. Accordingly, the operator is capable of performing the emendation operation, as the component information is received.

Next, in a case where the last component relevant information (4,2) is transmitted from the terminal device 2, in the print server device 1, the component relevant information (4,2) is received, and the component information "hhh.jpg" included in the component relevant information (4,2) is accumulated in the component information storage unit 112, in association with the component identifier "Y(4,2)". All of eight instances of component information for configuring the print object Y are on hand, and thus, the print object configuration unit 132 configures the final print object by disposing the component information "hhh.jpg" in the region E(4,2) of the fourth page included in the newest non-final print object (the second manuscript) that is stored in the storage unit 11, and outputs the final print object.

As described above, the final print object is configured by using the newly configured non-final print object, and one of the last received component information, and thus, it is possible to reduce a time until the print object of the final product is configured after all components for completing the print object are on hand.

Furthermore, the non-final print object configuration condition may be a condition in which the non-final print object is configured by using one or more instances of component information that are stored in the component information storage unit 112 in a case where the non-final page includes k or less pages (k is a natural number that is less than the total number of pages of the print object Y, and in this example, the total number of pages is 4, and thus, any one of k = 1, k = 2, or k = 3). In addition, the threshold value k of the non-final print object configuration condition may be variable.

Alternatively, the non-final print object configuration condition, for example, may be a condition in which the non-final print object is configured by using one or more instances of component information that are stored in the component information storage unit 112 in a case where the number of final pages is m or more pages (m is a natural number that is less than the total number of pages of the print object Y, and in this example, any one of m = 1, m = 2, and m = 3).

Furthermore, even in the case of a print object including two or more pages, such as the print object Y, the non-final print object may be configured by using the same non-final print object configuration condition as that in Specific Example 1, without distinguishing two or more pages from each other.

### (Specific Example 5)

Specific Example 5 is another operation example in the case of configuring the print object Y. In this example, the print object configuration information includes the attribute value of the print object. The attribute value, for example, is the number of pages. The non-final print object configuration condition in this example includes the condition relevant to the attribute value of the print object (the fifth condition). The fifth condition, for example, is a condition in which the non-final print object is configured in a case where the total number of pages of the print object is a threshold value or more (in this example, two pages).

For example, in Fig. 4, the print object configuration information 2 includes an attribute value "4" relevant to the number of pages of the print object Y. In addition, the print object configuration information 3 includes an attribute value "1" relevant to the number of pages of the print object X. The print object configuration unit 132 determines that the fifth condition is also satisfied since the total number of pages of the print object is four pages, and thus, is the threshold value or more, and configures the non-final print object, with respect to the print object Y. In contrast, the print object configuration unit 132 determines that the fifth condition is not satisfied since the total number of pages of the print object is one page, and thus, is less than the threshold value, and does not perform the processing of configuring the non-final print object, with respect to the print object X.

Furthermore, the attribute value included in the print object configuration information, for example, may be the number of copies. In this case, the fifth condition is a condition in which the non-final print object is configured in a case where the number of copies printed of the print object is the threshold value or more (in this example, 100 copies) or greater than the threshold value. For example, the print object configuration information 2 includes an attribute value "50" relevant to the number of copies of the print object Y, and the print object configuration information 3 includes an attribute value "200" relevant to the number of copies of a print object Z. In a case where it is determined that the fourth condition is satisfied, the print object configuration unit 132 may determine that the fifth condition is also satisfied, and may configure the non-final print object, with respect to the print object Y, whereas in a case where it is determined that the fourth condition is satisfied, the print object configuration unit 132 may determine that the fifth condition is not satisfied, and may not perform the processing of configuring the non-final print object, with respect to the print object Z.

In addition, the attribute value included in the print object configuration information, for example, may be the type of print object (for example, a flyer, a pamphlet, a book, and the like). In this case, the print object configuration unit 132, for example, may configure the non-final print object, with respect to a specific type of print object (for example, the book), but may not perform the processing of configuring the non-final print object, with respect to the other type of print object (for example, the flyer or the pamphlet). Alternatively, the print object configuration unit 132, for example, may configure the non-final print object regardless of the number of copies, with respect to the specific type of print object, but may configure the non-final print object in a case where the number of copies is the threshold value or more or greater than the threshold value, and may not perform the processing of configuring the non-final print object in a case where the number of copies is less than the threshold value or the threshold value or less, with respect to the other type of print object (for example, the flyer or the pamphlet).

In addition, the attribute value included in the print object configuration information, for example, may be the delivery destination of the print object that is managed (stored in the storage unit 11 or the like) in advance. In this case, the print object configuration unit 132 may configure the non-final print object, with respect to a specific delivery destination (for example, a delivery destination that is subjected to membership registration), but may not perform the processing of configuring the non-final print object, with respect to the other delivery destination (for example, a delivery destination that is not subjected to the membership registration).

As described above, it is possible to configure and output the non-final print object only in the case of the print object of which the print object configuration information includes a specific attribute value.

### (Other Specific Examples)

Furthermore, the non-final print object configuration condition, for example, may include only the first condition as described above. In this case, for example, the non-final print object configuration processing is executed every time when the component information is received.

In addition, the non-final print object configuration condition, for example, may be a condition in which the non-final print object is configured after the component information of a constant ratio or more or greater than the constant ratio is on hand, in two or more instances of component information that are necessary for configuring a final publication. The constant ratio may be a ratio of the number of instances of component information that are on hand, with respect to the number of instances of necessary component information, and may be a ratio of an information amount of the instances of component information that are on hand with respect to an information amount of the necessary component information, and a calculation method thereof is not limited. In addition, the constant ratio, for example, is 90%, 80%, a half, and the like, and the value is not limited.

As described above, according to this embodiment, the print server device 1, includes: the print object configuration information storage unit 111 in which the print object configuration information including the print object identifier for identifying one print object, and two or more component identifiers for identifying the component information for configuring the print object that is identified by the print object identifier is stored; the component information storage unit 112 in which the two or more instances of component information are stored in association with the print object identifiers; the component relevant information receiving unit 121 for receiving each of two or more instances of component relevant information including the component identifier, and the component information that is identified by the component identifier, at different times; the component information accumulation unit 131 for accumulating the component information included in the component relevant information that is received by the component relevant information receiving unit 121 in the component information storage unit 112, in association with the component identifier pairing up with the component information; and the print object configuration unit 132 for configuring the non-final print object by using one or more instances of component information that are stored in the component information storage unit 112 and are identified by the print object identifier before all instances of component information that are associated with two or more component identifiers pairing up with the print object identifiers included in the print object configuration information and configure the print object identified by the print object identifier included in the print object configuration information are on hand, in which the print object configuration unit 132 configures the final print object by using the newly configured non-final print object, and the component information of the last received component relevant information of the component relevant information receiving unit 121, and thus, it is possible to configure the non-final print object by using one or more instances of component information that are on hand before all of two or more instances of component information for configuring one print object are on hand. For this reason, it is possible to reduce a time until the configuration of a final product is finished after all instances of component information are on hand.

In addition, in the print server device 1 described above, the print object configuration unit 132 configures the non-final print object by using one or more instances of component information including the component information included in the component relevant information, with a case where the component relevant information receiving unit 121 receives the component relevant information, as a trigger, and thus, it is possible to configure the non-final print object, as the component relevant information is received. In addition, it is possible to configure the new non-final print object that is closer to the final print object, every time when the component relevant information is received.

In addition, in the print server device 1 described above, the print object configuration unit 132 configures the final print object by using the newly configured non-final print object, and the component information included in the last received component relevant information of the component relevant information receiving unit 121, and thus, it is possible to efficiently configure the final print object.

In addition, in the print server device 1 described above, the print object includes the fixed region and the variable region, and in a case where the component information included in the component relevant information that is received by the component relevant information receiving unit 121 is only the component information associated with the fixed region, the print object configuration unit 132 configures the non-final print object by using one or more instances of component information that are stored in the component information storage unit 112 and are identified by the print object identifiers before all instances of component information for configuring the print object that is identified by the print object identifier included in the print object configuration information are on hand, and thus, it is possible to configure the non-final print object only in a case where the component information included in the received component relevant information is only the component information associated with the fixed region.

In addition, in the print server device 1 described above, the print object includes the fixed region and the variable region, and in a case where there are two or more instances of component information associated with one variable region, in the component information included in the component relevant information that is received by the component relevant information receiving unit 121, the print object configuration unit 132 configures two or more non-final print objects in which each of two or more instances of component information is disposed in the variable region, for each of two or more instances of component information, and thus, it is possible to configure two or more types of non-final print objects in which different instances of component information are disposed in the variable region.

In addition, in the print server device 1 described above, the print object configuration unit 132 may configure the non-final print object, or may not configure the non-final print object, in accordance with the print object, and thus, it is possible to configure the non-final print object only in the case of the specific print object.

In addition, in the print server device 1 described above, the print object configuration information includes the attribute value of the print object, and the print object configuration unit 132 may configure the non-final print object or may not configure the non-final print object, in accordance with the attribute value of the print object, and thus, it is possible to configure the non-final print object only in the case of the print object of which the print object configuration information includes a specific attribute value.

Further, the processing in this embodiment may be fulfilled by software. Then, the software may be distributed by software download or the like. In addition, the software may be spread by being recorded in a recording medium such as a CD-ROM. Furthermore, this applies to the other embodiments described herein. Furthermore, the software for fulfilling an information processing device in this embodiment, is a program for allowing a computer to function as each unit described above, and for example, is a program as described below. That is, a computer accessible recording medium stores the print object configuration information storage unit 111 in which the print object configuration information including the print object identifier for identifying one print object and two or more component identifiers for identifying the component information for configuring the print object that is identified by the print object identifier is stored, and the component information storage unit 112 in which two or more instances of component information are stored in association with the print object identifier, and the program is a program for allowing a computer to function as: the component relevant information receiving unit 121 for receiving each of two or more instances of component relevant information including the component identifier, and the component information that is identified by the component identifier, at different times; the component information accumulation unit 131 for accumulating the component information included in the component relevant information that is received by the component relevant information receiving unit 121 in the component information storage unit 112, in association with the component identifier pairing up with the component information; and the print object configuration unit 132 for configuring the non-final print object by using one or more instances of component information that are stored in the component information storage unit 112 and are identified by the print object identifier before all instances of component information that are associated with two or more component identifiers pairing up with the print object identifier included in the print object configuration information and configure the print object identified by the print object identifier included in the print object configuration information are on hand.

Fig. 9 is a diagram illustrating an example of the appearance of a server 900 that executes the program described above, and fulfills the print server device 1. The embodiment described above can be fulfilled by computer hardware and a computer program that is executed on the computer hardware. In Fig. 9, the server 900 includes a computer 901 including a CD-ROM drive 905, a keyboard 902, a mouse 903, and a display 904. Furthermore, the entire system including the keyboard 902, the mouse 903, and the display 904 may be referred to as a computer.

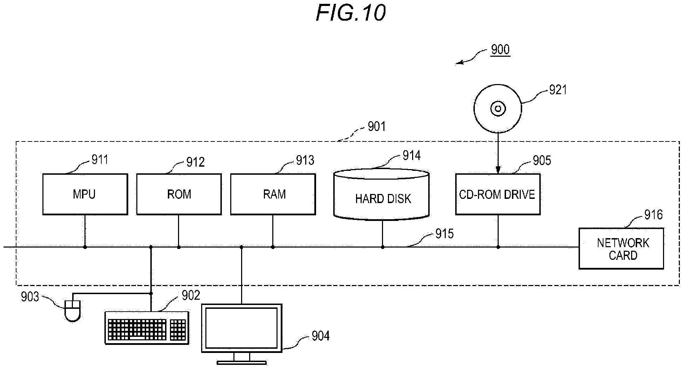

Fig. 10 is a diagram illustrating an internal configuration of the server 900. In Fig. 10, the computer 901 includes an MPU 911, an ROM 912 that stores a program such as a boot-up program, an RAM 913 that is connected to the MPU 911, temporarily stores a command of an application program, and temporarily provides a storage space, a hard disk 914 that stores an application program, a system program, and data, a bus 915 that connects the MPU 911, the ROM 912, and the like to each other, and a network card 916 that provides the connection with respect to a network such as the internet, in addition to the CD-ROM drive 905.

The program for allowing the server 900 to execute the function of the print server device 1 may be stored in the CD-ROM 921, may be inserted into the CD-ROM drive 905, and may be transmitted to the hard disk 914. Alternatively, the program may be transmitted to the computer 901 through the network such as the internet, and may be stored in the hard disk 914. The program is loaded in the RAM 913 at the time of being executed. Furthermore, the program may be directly loaded from the CD-ROM 921 or the network. In addition, the program may be written in the server 900 through other detachable recording media (for example, a DVD, a memory card, or the like) instead of the CD-ROM 921.

The program may not necessarily include an operating system (OS) for executing the function of the print server device 1, a third-party program, or the like, in a reference numeral of 901 indicating the details of the computer. The program may include only a part of a command that calls out a suitable function or a module under control such that a desired result is obtained. The operation of the server 900 is known, and thus, the detailed description will be omitted.

Furthermore, in the program described above, a transmitting step of transmitting information, a receiving step of receiving the information, or the like does not include processing that is performed by hardware, for example, processing that is performed by a network card or the like in the transmitting step (processing that is performed by only hardware).

In addition, the computer for executing the program described above may be a single computer, or a plurality of computers. That is, centralized processing may be performed, or decentralized processing may be performed.

In addition, in the embodiment described above, each processing (each function) may be fulfilled by centralized processing of a single device (system), or may be fulfilled by decentralized processing of a plurality of devices.

Furthermore, in Embodiment 1, rendering is not particularly noted, but for example, the print object configuration unit 132 may perform rendering on each print object or each page by using two or more instances of component information after all of two or more instances of component information for configuring one print object are on hand, or it is preferable that a rendering unit (not illustrated) performs the rendering on each component before all instances of component information are on hand.

The rendering, for example, may be processing of visualizing information, or also can be processing of converting the component information into a component image that is the image of the component. More specifically, the rendering, for example, may be processing of converting data in a vector form that is suitable for processing such as working or editing into data in a bitmap form that is suitable for an output device such as a printer or a display that performs raster output. In addition, the rendering, for example, may be considered to also include processing of converting a certain type of bitmap data (for example, JPEG or the like) into the other type of bitmap data (for example, GIF or the like). Further, the rendering, for example, may be considered to also include processing of changing image quality of the bitmap data (for example, the number of pixels, a color, a brightness, or the like).

In Embodiment 2, a print server device for performing the rendering on each component before all instances of component information are on hand will be described. Furthermore, the same reference numerals will be applied to constituents that perform the same operations as those of Embodiment 1, and the description thereof will be omitted, or the same reference numerals with suffixes will be applied to constituents that perform operations partially different from those of Embodiment 1, and only the differences will be described. Further, the description of common subject matters to Embodiment 1 will also be omitted.

### (Embodiment 2)

A concept diagram of the print system in this embodiment may be identical to Fig. 1. However, hereinafter, in the case of referring to Fig. 1, the print server device 1 will be substituted with a print server device 1a. The print system includes a print server device 1a and one or two or more terminal devices 2. A main difference of the print server device 1a from the print server device 1 described above is that the rendering is performed on each component before all of two or more instances of component information for configuring one print object are on hand.

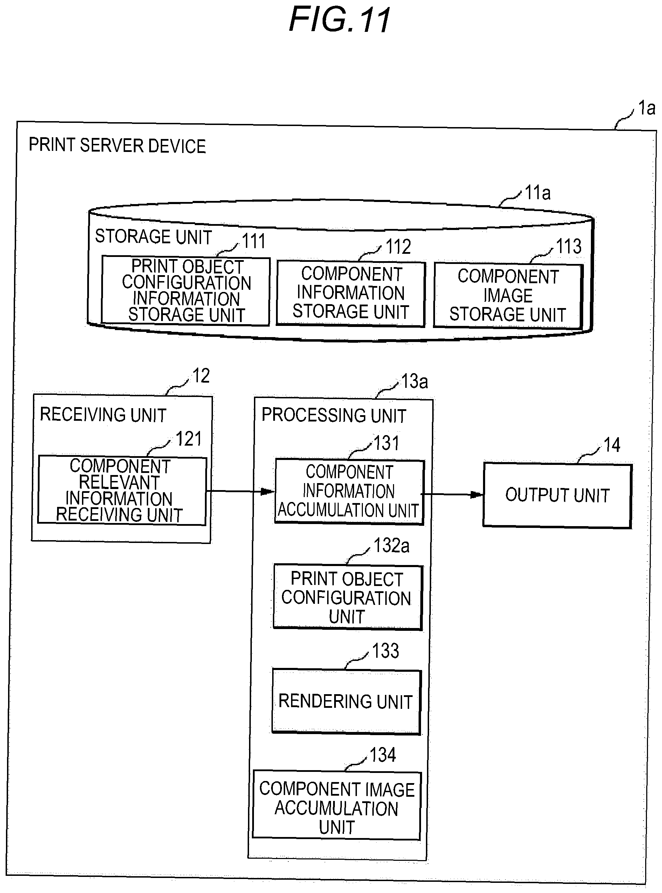

Fig. 11 is a block diagram of the print server device 1a. The print server device 1a includes a storage unit 11a, the receiving unit 12, a processing unit 13a, and the output unit 14. The storage unit 11a includes the print object configuration information storage unit 111, the component information storage unit 112, and a component image storage unit 113. The receiving unit 12 includes the component relevant information receiving unit 121. The processing unit 13a includes the component information accumulation unit 131, a print object configuration unit 132a, a rendering unit 133, and a component image accumulation unit 134.

The storage unit 11a that configures the print server device 1a is capable of storing various instances of information. The various instances of information, for example, are the print object configuration information described above, the component information described above, the component image described below, and the like.

Furthermore, specifically, the component information, for example, may be vector data. The vector data may be data in a form in which one or more objects such as a dot, a line, a circle, or a rectangle for configuring a component, for example, are expressed by a collection of sets of type information such as "dot" or "line", and one or more numerical values indicating coordinates, a length, a direction, or the like. The vector data, for example, is data of Illustrator (Registered Trademark), Photoshop (Registered Trademark), or the like, but the type of vector data is not limited.

The vector data is converted into bitmap data by the rendering unit 133 described below, and then, is output to a printer or the like. The bitmap data is identical to raster data, and for example, may be a collection of pixels. The pixel is minimum unit of an image, and for example, includes color information such as RGB or YUV. The bitmap data, for example, is GIF, JPEG, or the like, but the type of bitmap data is not limited.

Alternatively, the component information, for example, may be originally bitmap data. Component information in a vector form and component information in a bitmap form may be included in two or more instances of component information for configuring one print object. Furthermore, in this case, the rendering unit 133 described below may perform the rendering only on the component information in the vector form to be converted into the component information in the bitmap form, and it is not necessary to perform such rendering on the component information that is originally in the bitmap form. However, the rendering unit 133, for example, may perform one or more types of processings of converting the component information in the bitmap form into component information in the other type of bitmap form or of adjusting the image quality, on the component information in the bitmap form.

One or two or more component images are stored in the component image storage unit 113. The component image, for example, includes the collection of pixels as described above. Specifically, the component image may be bitmap data as described above.

The component image storage unit 113, for example, is capable of storing two or more component images associated with two or more instances of component information that are stored in the component information storage unit 112. Two or more component images that are stored in the component image storage unit 113, for example, may be two or more images that are acquired by rendering each of two or more instances of component information with the rendering unit 133 described below.

The processing unit 13a executes various processings. The various processings, for example, are processings of the component information accumulation unit 131 described above, the print object configuration unit 132a described below, the rendering unit 133 described below, the component image accumulation unit 134 described below, and the like.

The rendering unit 133 performs the rendering. The rendering, for example, may include one or more types of processings of processing of converting the vector data into the bitmap data, processing of converting a certain type of bitmap data into the other type of bitmap data, or processing of adjusting the image quality, and processing of decompressing a processing result in a frame memory or the like.

The rendering unit 133, in general, performs the rendering on each component. Performing the rendering on each component indicates that the rendering is performed on each of one or two or more instances of component information. The rendering unit 133, for example, performs the rendering on each of one or more instances of component information that are stored in the component information storage unit 112, and acquires one or more component images that are the image of the component.

The rendering unit 133, for example, may perform the rendering on the component information, as the component relevant information receiving unit 121 receives the component information or as the component information accumulation unit 131 accumulates the component information, and may acquire the component image associated with the component information.

Alternatively, it is preferable that the rendering unit 133 determines whether or not to perform the rendering on each of one or more instances of component information, on the basis of a rendering condition, and performs the rendering on the component information with the case of satisfying the rendering condition as a trigger.

The rendering condition is a condition for determining whether or not to perform the rendering. The rendering condition, for example, may include a condition relevant to a timing. The condition relevant to the timing, for example, may indicate that the component relevant information receiving unit 121 receives the component information or the component information accumulation unit 131 accumulates the component information, or may indicate timing information described below. The condition relevant to the timing, for example, may indicate that it is a set time or information that is acquired from the outside is coincident with the condition. The information that is acquired from the outside being coincident with the condition, for example, indicates that news information or weather information that is acquired from an external server (not illustrated) is coincident with the condition or an e-mail in which the order is determined from the contents is received.

In addition, the rendering condition, for example, may be a condition relevant to the amount of component information that is received. The condition relevant to the amount of component information, for example, may indicate that the components of x% or more or greater than x% in two or more instances of component information necessary for configuring the final print object are received or accumulated, or may be the same condition as the non-final print object configuration condition in the embodiment described above. The condition relevant to the amount of component information, for example, may indicate that a data size of the accumulated component information is y MB or more or greater than y MB. In addition, the condition relevant to the amount of component information, for example, indicates that the number of instances of component information increases as the condition is satisfied.

Further, the rendering condition, for example, may include the condition relevant to the attribute value of the component. In this case, the rendering unit 133 may perform the rendering or may not perform the rendering, in accordance with the attribute value of each component.

The attribute value is information indicating the attribute of the component. The attribute value, for example, is a data type, a data amount, and an update date, and may be a time necessary for the rendering. The data type is information indicating the form of the component information. The data type, for example, may be text data, image data, vector data, bitmap data, or the like. The data amount is information indicating a data amount of the component information. One or more types of instances of information in the data type and the data amount, for example, are included in each of one or more instances of component information that are stored in the component information storage unit 112. Furthermore, the time necessary for the rendering is a required time at the time of performing the rendering on the component information, and for example, may be calculated on the basis of the data type and the data amount.

Specifically, in a case where the attribute value is the data type, the rendering condition, for example, may indicate that "in a case where the data type of the component information is the image data, the rendering is performed immediately after the component information is received or accumulated, and in a case where the data type of the component information is the text data, the rendering is performed after the last component information is received or accumulated". In addition, the rendering condition, for example, may indicate that "in a case where the image data is the vector data, the rendering including the conversion with respect to the bitmap data, the adjustment of the image quality, and the like is performed, and in a case where the image data is the bitmap data, the rendering other than the conversion with respect to the bitmap data is performed". In addition, the rendering condition, for example, may indicate that "in a case where the data type of the component information is the vector data or the text data, the rendering is performed immediately after the component information is received or accumulated, and in a case where the data type of the component information is the other data type, the rendering is performed after the last component information is received or accumulated". In addition, in a case where the attribute value is the data type, the rendering condition, for example, may indicate that "in a case where a blend mode of the image is designated in the attribute value, the rendering is performed immediately after the component information is received or accumulated".

In addition, in a case where the attribute value is the data amount, the rendering condition, for example, may indicate that "in a case where the data amount of the component information is greater than a threshold value or the threshold value or more, the rendering is performed, and in a case where the data amount of the component information is the threshold value or less or less than the threshold value, the rendering is performed after the last component information is received or accumulated".

In addition, in a case where the attribute value is the time necessary for the rendering, the rendering condition, for example, may indicate that "in a case where the time necessary for the rendering of the component information is longer than a threshold value or the threshold value or longer, the rendering is performed, and in a case where the time necessary for the rendering of the component information is the threshold value or shorter or shorter than the threshold value, the rendering is performed after the last component information is received or accumulated".

In addition, in a case where the attribute value is the data amount, the rendering condition indicates that the data amount of the component information that is received increases as a condition set in advance is satisfied (for example, the data amount is 1 MB or more or greater than 1 MB), and the data amount decreases as the condition set in advance is satisfied (for example, the data amount is 1 KB or less or less than 1 KB).

In addition, the attribute value may be an attribute value of a text in the component information. The attribute value of the text, for example, includes the language of the text data, text data over a plurality of pages, and a specific character string (for example, a "male").

In addition, the rendering condition may be a condition using information based on an image analysis result. For example, the rendering condition may indicate that the component information that is an image is subjected to image analysis, and a person in the image is smiling.

In addition, in a case where the attribute value is the update date, the rendering condition, for example, indicates that the update date of the component information is after a specific date, and the update date of the component information has passed X days or more.

Further, the rendering condition, for example, may indicate that the component information is collated with a database (not illustrated, may be in the external server), and there is the component information, or the component information is matched with data in the database.

The rendering unit 133, for example, may determine whether or not to perform the rendering on the component information, as the component information is received or accumulated.

In addition, the rendering unit 133, for example, retains a flag indicating whether or not the rendering is finished, in combination with each of one or more instances of component information that are stored in the component information storage unit 112. As described above, it is preferable that the rendering unit 133 determines whether or not to perform the rendering on the component information, as the component information is received or accumulated, and then, determines whether or not to perform the rendering on each of one or more instances of component information that are stored in the component information storage unit 112, with reference to the flag that is retained in combination with the component information.

In addition, the rendering unit 133, for example, retains timing information indicating a timing for performing the determination, and as described above, may perform the determination in accordance with the timing information, in addition to or instead of performing the determination as the component information is received or accumulated.

Further, in the case of using the print object configuration information in which one component identifier appears in one or two or more instances of print object configuration information a plurality of times, the rendering condition may indicate that the rendering unit 133 performs rendering processing on the component information that is identified by the one component identifier once, and does not perform the rendering processing on the other component information that is identified by the one component identifier. That is, it is obvious that one instance of image information that is subjected to the rendering is redundantly used in one or two or more print objects.

The component image accumulation unit 134 accumulates the component image in the component image storage unit 113. The component image accumulation unit 134, for example, accumulates the component image that is acquired by the rendering unit 133 in the component image storage unit 113, in association with the component identifier pairing up with the component image.

The print object configuration unit 132a, basically, configures the print object in the same procedure as that of the print object configuration unit 132 of the example described above. That is, the print object configuration unit 132a is capable of configuring the final print object after all instances of component information are on hand. In addition, the print object configuration unit 132a is also capable of configuring the non-final print object before all instances of component information are on hand.

However, the print object configuration unit 132a does not perform the any rendering on each print object or each page at the time of configuring the final print object or the non-final print object. Alternatively, the print object configuration unit 132a configures the final print object or the non-final print object by compositing two or more component images that are stored in the component image storage unit 113, as a result of the processing of the rendering unit 133 and the component image accumulation unit 134 described below.

Specifically, the print object configuration unit 132a is capable of configuring the print object that is identified by the print object identifier by acquiring the two or more component images from the component image storage unit 113, and by compositing the two or more component images, after all of two or more instances of component information for configuring the print object identified by the print object identifier included in the print object configuration information that is stored in the print object configuration information storage unit 111 are on hand.

In addition, in this embodiment, one or more component images associated with one or more instances of component information that are identified by the print object identifiers are stored in the component image storage unit 113 before all instances of component information are on hand, and thus, the print object configuration unit 132a is also capable of configuring the non-final print object by compositing one or more component images that are stored in the component image storage unit 113.

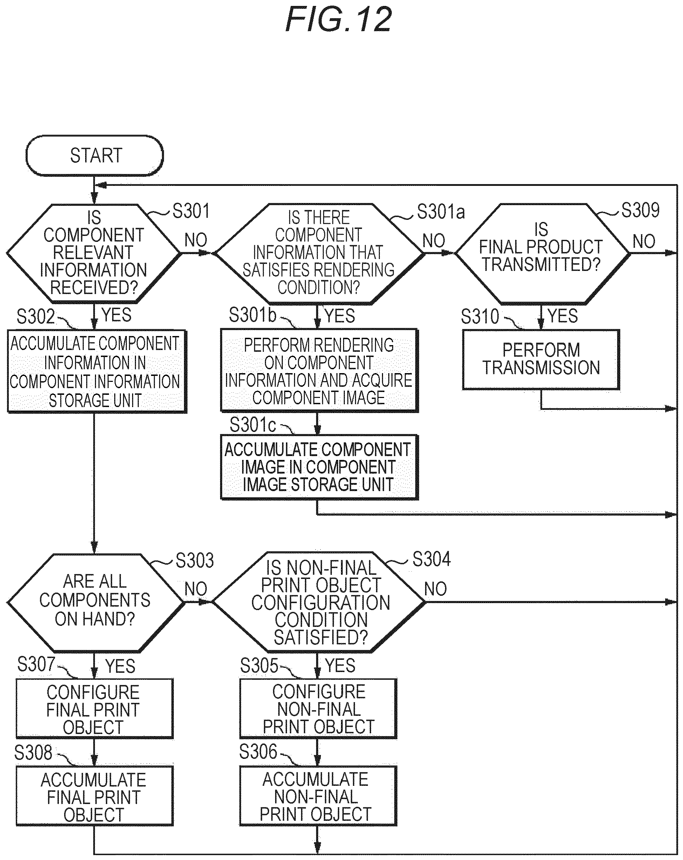

Next, the operation of the print server device 1a will be described by using a flowchart of Fig. 12. Furthermore, in the flowchart, Steps S301a to S301c that are executed in the case of No in Step S301 are added, compared to the flowchart of Fig. 3.

(Step S301) The processing unit 13a determines whether or not the component relevant information receiving unit 121 receives the component relevant information from the terminal device 2. In a case where it is determined that the component relevant information receiving unit 121 receives the component relevant information from the terminal device 2, the process proceeds to Step S302, and in a case where it is determined that the component relevant information receiving unit 121 does not receive the component relevant information from the terminal device 2, the process proceeds to Step S301a.

(Step S301a) The rendering unit 133 determines whether or not there is the component information that satisfies the rendering condition. In a case where there is the component information that satisfies the rendering condition, the process proceeds to Step S301b, and in a case where there is no component information that satisfies the rendering condition, the process proceeds to Step S309.

(Step S301b) The rendering unit 133 performs the rendering on the component information, and acquires the component image.

(Step S301c) The component image accumulation unit 134 accumulates the component image that is acquired by the rendering unit 133 in the component image storage unit 113, in association with the component identifier pairing up with the component image. After that, the process returns to Step S301.

The processings after Step S302 are identical to those of Fig. 3 except for the followings. That is, in Step S307, the print object configuration unit 132a configures the final print object by compositing two or more component images that are stored in the component image storage unit 113. In addition, in Step S305, the print object configuration unit 132a configures the non-final print object by compositing one or more component images that are stored in the component image storage unit 113.

Next, a specific operation example of the print system in this embodiment will be described. The operation example is identical to the operation example in the embodiment described above except for the followings.

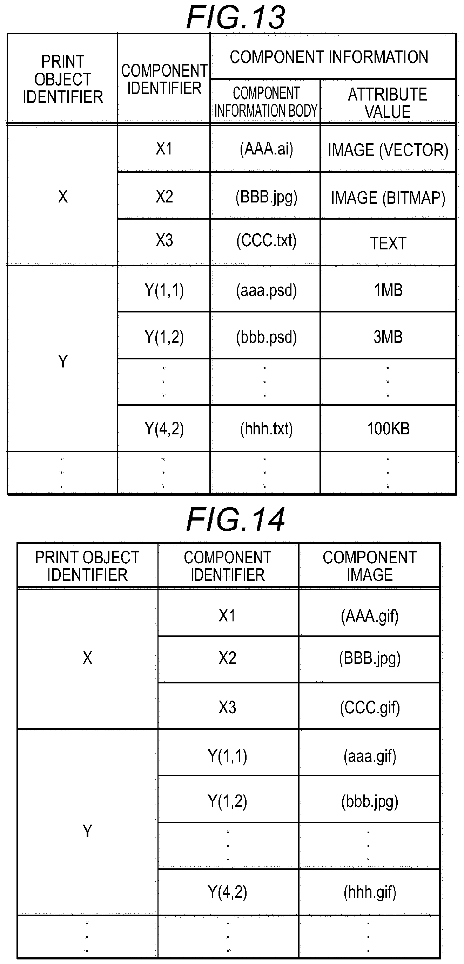

In the component information storage unit 112, for example, one or more instances of component information as illustrated in Fig. 13 are stored for each print object, in association with the component identifiers. The component information, for example, includes a component information body and an attribute value. The component information body is a file of image data, text data, or the like, and for example, is associated with a file identifier such as "AAA.ai" or "CCC.txt". The attribute value, for example, is an attribute value relevant to a data type, an attribute value relevant to a data amount, or the like.

One or more instances of component information for each print object, for example, are three instances of component information that are identified by the component identifiers "X1" to "X3" associated with the print object identifier "X", eight instances of component information that are identified by the component identifiers "Y(1,1)" to "Y(4,2)" associated with the print object identifier "Y", and the like.

In three instances of component information described above, for example, the component information that is identified by the component identifier "X1" includes a component information body "AAA.ai" and an attribute value relevant to a data type "image (vector)". "ai" is an extension associated with Illustrator (Registered Trademark), and "image (vector)" is an attribute value indicating that the image data is image data in a vector form. Similarly, the component information that is identified by the component identifier "X2" includes a component information body "BBB.jpg" and an attribute value relevant to a data type "image (bitmap)". "image (bitmap)" is an attribute value indicating that the image data is image data in a bitmap form. The component information that is identified by the component identifier "X3" includes a component information body "CCC.txt" and an attribute value relevant to a data type "text".

In eight instances of component information described above, the component information that is identified by the component identifier "Y(1,1)" includes a component information body "aaa.psd" and an attribute value relevant to a data amount "1 MB". "psd" is an extension associated with Photoshop (Registered Trademark), and "1 MB" indicates that a data amount of the component information is 1 MB. Similarly, the component information that is identified by the component identifier "Y(4,2)" includes a component information body "bbb.psd" and an attribute value relevant to a data amount "3 MB". The component information that is identified by the component identifier "Y(4,2)" includes a component information body "hhh.txt" and an attribute value relevant to a data amount "100KB".

In the component image storage unit 113, for example, one or more component images as illustrated in Fig. 14 are stored for each print object, in association with the component identifiers. One or more component images for each print object, for example, are three component images pairing up with three instances of component information that are identified by the component identifier "X1" to "X3" associated with the print object identifier "X", eight component images pairing up with eight instances of component information that are identified by the component identifiers "Y(1,1)" to "Y(4,2)" associated with the print object identifier "Y", and the like.

The three component images described above, for example, are a component image "aaa.gif" obtained by rendering the component information body "AAA.ai" included in the component information that is identified by the component identifier "X1", the same component image "BBB.jpg" as the component information body "BBB.jpg" included in the component information that is identified by the component identifier "X2", and a component image "CCC.gif" obtained by rendering the component information body "CCC.txt" included in the component information that is identified by the component identifier "X3". Furthermore, "gif" is an extension associated with GIF.

The eight component images described above, for example, are a component image "aaa.gif" obtained by rendering the component information body "aaa.psd" included in the component information that is identified by the component identifier "Y(1,1)", a component image "bbb.gif' obtained by rendering the component information body "bbb.psd" included in the component information that is identified by the component identifier "Y(1,2)", ···, a component image "hhh.gif' obtained by rendering the component information body "hhh.txt" included in the component information that is identified by the component identifier "Y(4,2)", and the like.

At the current time point, in the component information storage unit 112, only the print object identifiers ("X", "Y", and the like) and the component identifiers ("X1" to "X3", Y(1,1) to Y(4,2), and the like) are stored, and the component information is not stored yet. In the component image storage unit 113, only the print object identifiers and the component identifiers are stored, and the component image is not stored yet. Furthermore, the print object identifiers and the component identifiers that are stored are information that is acquired from the print object configuration information storage unit 111.

Currently, the terminal device 2 transmits the component relevant information including the component identifier "X1" and the component information "AAA.ai" (hereinafter, may be referred to as the first component relevant information) to the print server device 1.

In the print server device 1a, the component relevant information receiving unit 121 receives the first component relevant information described above, and the component information accumulation unit 131 accumulates the component information including the component information body "AAA.ai" and the attribute value "image (vector)" (the first component information) in the component information storage unit 112, in association with the component identifier "X1".

Furthermore, the component information accumulation unit 131, for example, retains associated information that is a collection of sets of the extension included in the file identifier and the attribute value relevant to the data type. The collection of the extension and the attribute value, for example, is a set of "ai" and "image (vector)", a set of "jpg" and "image (bitmap)", a set of "txt" and "text", and the like. The component information accumulation unit 131 is capable of acquiring the attribute value "image (vector)" pairing up with the extension "ai" of the component information body "AAA.ai" that is received, by using the associated information.

On the other hand, rendering unit 133, for example, retains a rendering condition relevant to a data type, a rendering condition relevant to a data amount, and the like. The rendering condition relevant to the data type indicates that "in a case where the data type of the component information is image data in a vector form, the rendering is performed immediately after the component information is received or accumulated, in a case where the data type of the component information is text data, the rendering is performed after the last component information is received or accumulated, and in a case where the data type of the component information is bitmap, the rendering other than the conversion from the vector form into the bitmap form is performed". The rendering condition relevant to the data amount indicates that "in a case where the data amount of the component information is greater than a threshold value "2 MB" or the threshold value "2 MB" or more, the rendering is performed, and in a case where the data amount of the component information is the threshold value "2 MB" or less or less than the threshold value "2 MB", the rendering is performed after the last component information is received or accumulated or at a time point when the non-final print object configuration condition is satisfied".

The rendering unit 133 determines whether or not there is the component information that satisfies the rendering condition, as the first component relevant information described above is received or the first component information described above is accumulated. Here, the first component information described above is the image data in the vector form, and thus, the rendering unit 133 performs the rendering on the component information body "AAA.ai" immediately after the component information is received or accumulated, and acquires the component image "AAA.gif".

The component image accumulation unit 134 accumulates the component image "AAA.gif" that is acquired by the rendering unit 133 in the component image storage unit 113, in association with the component identifier "X1" pairing up with the component image.

For example, the terminal device 2 transmits the component relevant information including the component identifier "X2" and the component information "BBB.jpg" (the second component relevant information) to the print server device 1, in 2 hours.

In the print server device 1a, the component relevant information receiving unit 121 receives the second component relevant information described above, and the component information accumulation unit 131 accumulates the component information including the component information body "BBB.jpg" and the attribute value "image (bitmap)" (the second component information) in the component information storage unit 112, in association with the component identifier "X2".

The rendering unit 133 determines whether or not there is the component information that satisfies the rendering condition, as the second component relevant information described above is received or the second component information described above is accumulated. Here, the second component information described above is the image data in the bitmap form, and thus, the rendering unit 133 does not perform the conversion from the vector form into the bitmap form, but performs only the adjustment of the image quality, or the like, and acquires the same component image "BBB.jpg" as that of the second component information.

The component image accumulation unit 134 accumulates the component image "BBB.jpg" that is acquired by the rendering unit 133 in the component image storage unit 113, in association with the component identifier "X2" pairing up with the component image.

On the other hand, the print object configuration unit 132a retains that "configuring the non-final print object at a time point when there is one instance of component information that are not stored", as the non-final print object configuration condition. At this time point, in the component information storage unit 112, two instances of component information that are identified by the component identifiers "X1" and "X2" are stored, in the three instances of component information for configuring the final print object X described above. For this reason, the print object configuration unit 132a determines that there is one instances of component information that are not stored, and the non-final print object configuration condition is satisfied, with respect to the print object X. Therefore, the print object configuration unit 132a acquires two component images "AAA.gif" and "BBB.jpg" associated with two instances of component information that are identified by the component identifiers "X1" and "X2" from the component image storage unit 113, and configures the non-final print object X by compositing the two component images.

For example, the terminal device 2 transmits the component relevant information including the component identifier "32" and the component information "CCC.txt" (the third component relevant information) to the print server device 1, in 1 hour.

In the print server device 1a, the component relevant information receiving unit 121 receives the third component relevant information described above, and the component information accumulation unit 131 accumulates the component information including the component information body "CCC.txt" and the attribute value "text" (the third component information) in the component information storage unit 112, in association with the component identifier "X3".

The rendering unit 133 determines whether or not there is the component information that satisfies the rendering condition, as the third component relevant information described above is received or component information described above is accumulated. Here, the third component information described above is the text data, and thus, the rendering unit 133 determines to perform the rendering after the last component information is received or accumulated, in accordance with the rendering condition described above. However, the third component information described above is the last component information, and thus, the rendering unit 133 determines that the rendering condition is satisfied at this time point, performs the rendering on the component information body "CCC.txt", and thus, acquires the component image "CCC.gif".

The component image accumulation unit 134 accumulates the component image "CCC.gif" that is acquired by the rendering unit 133 in the component image storage unit 113, in association with the component identifier "X3" pairing up with the component image.

Accordingly, in the component information storage unit 112, all of three instances of component information for configuring the final print object X described above are stored, and in the component image storage unit 113, three component images associated with the three instances of component information are stored. Therefore, the print object configuration unit 132a determines that all instances of component information are on hand, with respect to the print object X, and acquires three instances of component information from the component image storage unit 113. Then, the print object configuration unit 132a configures the final print object X by compositing three component images that are acquired.

As described above, the rendering is performed on each component, and the component image is accumulated, before all of three instances of component information for configuring the final print object X are on hand, and thus, a time until the print object X is configured after all instances of component information are on hand is reduced. In addition, a time required for configuring the non-final print object Y is also reduced.

Furthermore, processing relevant to the print object Y is as follows. The processing is identical to the processing relevant to the print object X described above, except that the rendering condition for determining whether or not to perform the rendering on each component information is the rendering condition relevant to the data amount.

Currently, the terminal device 2 transmits the component relevant information including the component identifier "Y(1,1)" and the component information "aaa.psd" (the first component relevant information) to the print server device 1a.

In the print server device 1a, the component relevant information receiving unit 121 receives the first component relevant information described above, and the component information accumulation unit 131 accumulates the component information including the component information body "aaa.psd" and the attribute value "1 MB" (the first component information) in the component information storage unit 112, in association with the component identifier "Y(1,1)". Furthermore, in the component relevant information, in general, information indicating the data amount of the component information is also included, and the component information accumulation unit 131, for example, may acquire the data amount "1 MB" from the first component relevant information, and may set the data amount "1 MB" to the attribute value.

The rendering unit 133 determines whether or not there is the component information that satisfies the rendering condition, as the first component relevant information described above is received or the first component information described above is accumulated. Here, the data amount of the first component information described above is 1 MB, and thus, the rendering unit 133 determines to perform the rendering after the last component information is received or accumulated or at a time point when the non-final print object configuration condition is satisfied, and does not perform the rendering at the current time point, by using the rendering condition relevant to the data amount.

For example, the terminal device 2 transmits the component relevant information including the component identifier "Y2" and the component information "bbb.jpg" (the second component relevant information) to the print server device 1, in 30 minutes.

In the print server device 1a, the component relevant information receiving unit 121 receives the second component relevant information described above, and the component information accumulation unit 131 accumulates the component information including the component information body "bbb.psd" and the attribute value "3 MB" (the second component information) in the component information storage unit 112, in association with the component identifier "Y2".

The rendering unit 133 determines whether or not there is the component information that satisfies the rendering condition, as the second component relevant information described above is received or the second component information described above is accumulated. Here, the data amount of the second component information described above is 3 MB, and thus, the rendering unit 133 determines that the rendering condition relevant to the data amount is satisfied, performs the rendering on the component information body "bbb.psd", and acquires the component image "bbb.gif".

The component image accumulation unit 134 accumulates the component image "bbb.gif" that is acquired by the rendering unit 133 in the component image storage unit 113, in association with the component identifier "Y(1,2)" pairing up with the component image.

Hereinafter, the instances of component relevant information subsequent to the third component relevant information are transmitted from the terminal device 2 at a suitable time interval. In the print server device 1a, the component relevant information receiving unit 121 receives each of the instances of component relevant information subsequent to the third component relevant information, and the component information accumulation unit 131 accumulates each of the instances of component information subsequent to the third component information in the component information storage unit 112. The rendering unit 133 determines whether or not the data amount of the component information satisfies the rendering condition, as each of the instances of component relevant information subsequent to the third component relevant information is received or each of the instances of component information subsequent to the third component information is accumulated, performs the rendering on the component information that satisfies the rendering condition, and acquires the component image. The component image accumulation unit 134 accumulates the component image that is acquired in the component image storage unit 113, in association with the component identifier pairing up with the component image.

After that, the instances of component relevant information subsequent to the eighth component relevant information are transmitted from the terminal device 2. In the print server device 1a, the component relevant information receiving unit 121 receives the instances of component relevant information subsequent to the eighth component relevant information, and the component information accumulation unit 131 accumulates the eighth component information in the component information storage unit 112. The rendering unit 133 determines whether or not the data amount of the eighth component information satisfies the rendering condition, as the eighth component relevant information is received or the eighth component information is accumulated. Here, the data amount of the eighth component information is 1 MB, and thus, the rendering unit 133 determines not to perform the rendering at the current time point, by using the rendering condition relevant to the data amount. However, the eighth component information is the last component information, and thus, the rendering unit 133 determines to perform the rendering, performs the rendering on the component information body "hhh.txt", and acquires the component image "hhh.gif". Further, the rendering unit 133 acquires the component information that is not subjected to the rendering yet, such as "aaa.psd", from the component information storage unit 112. Then, the rendering unit 133 performs the rendering on the component information that is acquired, such as "aaa.psd", and acquires the component image such as "aaa.gif".

The component image accumulation unit 134 accumulates the component image that is acquired, such as "hhh.gif' and "aaa.gif" in the component image storage unit 113, in association with the component identifiers "Y(4,2)" and "Y(1,1)" pairing up with the component images, and the like.

Accordingly, in the component information storage unit 112, all of eight instances of component information for configuring the final print object Y described above are stored, and in the component image storage unit 113, eight component images associated with the eight instances of component information are stored. Therefore, the print object configuration unit 132a determines that all instances of component information are on hand, with respect to the print object Y, and acquires eight instances of component information from the component image storage unit 113. Then, the print object configuration unit 132a configures the final print object Y by compositing eight component images that are acquired.

As described above, the rendering is performed on each component before all of eight instances of component information for configuring the final print object Y are on hand, and the component image is accumulated, and thus, a time until the print object Y is configured after all instances of component information are on hand is reduced.

Furthermore, in a case where the non-final print object configuration condition is satisfied before all instances of component information are on hand, the print object configuration unit 132a configures the non-final print object Y by compositing one or more instances of component information that are stored in the component image storage unit 113 at this time point. As described above, a time required for configuring the non-final print object Y is also reduced.

As described above, according to this embodiment, the recording medium includes the component information storage unit 112 in which two or more instances of component information are stored in association with the print object identifiers for identifying one print object, and the component image storage unit 113 in which two or more component images associated with two or more instances of component information are stored, and the print server device 1a performs the rendering on each of one or more instances of component information that are stored in the component information storage unit 112, acquires the component image that is the image of the component, accumulates the component image that is acquired in the component image storage unit 113, and configures the print object by compositing two or more component images that are stored in the component image storage unit 113, and thus, it is possible to rapidly configure the final print object after all instances of component information are on hand.

In addition, the print server device 1a determines whether or not to perform the rendering on the component information, on the basis of the rendering condition that is the condition for performing the rendering, performs the rendering on the component information with the case of satisfying the rendering condition as a trigger, and acquires the component image, and thus, it is possible to reduce a time until the configuration of a final product is finished after all instances of component information are on hand.

In addition, the rendering condition includes the condition relevant to the timing, and the print server device 1a receives each of two or more instances of component relevant information including the component identifier and the component information that is identified by the component identifier, at different times, accumulates the component information included in the component relevant information that is received in the component information storage unit, in association with the component identifier pairing up with the component information, and performs the rendering on the component information, as the component information is received or the component information accumulation unit accumulates the component information, and thus, it is possible to perform the rendering at the earliest timing, and to reduce a time until the configuration of a final product is finished after all instances of component information are on hand.

In addition, the rendering condition includes the condition relevant to the attribute value of the component, and the print server device 1a may perform the rendering or may not perform the rendering, in accordance with the attribute value of the component, and thus, it is possible to suitably perform the rendering in advance, in accordance with the attribute value of the component.

In addition, the recording medium further includes the print object configuration information storage unit 111 in which print object configuration information that is information indicating the configuration of the final print object and information including the print object identifier, and two or more component identifiers for identifying the component information for configuring the print object that is identified by the print object identifier is stored, and the print server device 1a configures the non-final print object by compositing one or more component images that are associated with one or more instances of component information identified by the print object identifiers and are stored in the component image storage unit 113, before all instances of component information that are associated with two or more component identifiers pairing up with the print object identifiers included in the print object configuration information and configure the print object identified by the print object identifier included in the print object configuration information are on hand, and thus, it is possible to reduce a time until the configuration of a final product is finished after all instances of component information are on hand.

Furthermore, software for fulfilling an information processing device in this embodiment, for example, is a program as described below. That is, a computer accessible recording medium includes the component information storage unit 112 in which two or more instances of component information are stored in association with the print object identifiers for identifying one print object, and the component image storage unit 113 in which two or more component images associated with two or more instances of component information are stored, and the program is a program for allowing a computer to function as: the rendering unit 133 for performing the rendering on each of one or more instances of component information that are stored in the component information storage unit 112, and for acquiring the component image that is the image of the component; the component image accumulation unit 134 for accumulating the component image that is acquired by the rendering unit 133 in the component image storage unit 113; and the print object configuration unit 132a for configuring the print object by compositing two or more component images that are stored in the component image storage unit 113.

The invention is not limited to the embodiments described above, and can be variously changed, and it is obvious that such changes are also included in the scope of the invention.

### Industrial Applicability

As described above, the print server device according to the invention has an effect of enabling the final print object to be rapidly configured after all of two or more instances of component information for configuring one print object are on hand, and is useful as a print server device or the like.

## Claims

1. A print server device, comprising:
a component information storage unit in which two or more instances of component information are stored in association with print object identifiers for identifying one print object;
a component image storage unit in which two or more component images associated with the two or more instances of component information are stored;
a rendering unit for performing rendering on each of one or more instances of component information stored in the component information storage unit and acquiring the component image that is an image of a component;
a component image accumulation unit for accumulating the component image acquired by the rendering unit in the component image storage unit; and
a print object configuration unit for configuring a print object by compositing the two or more component images stored in the component image storage unit.

2. The print server device according to claim 1,
wherein the rendering unit determines whether or not the rendering is performed on the component information, on the basis of a rendering condition that is a condition for performing the rendering, performs the rendering on the component information with the case of satisfying the rendering condition as a trigger, and acquires the component image.

3. The print server device according to claim 2,
wherein the rendering condition is a condition relevant to a timing.

4. The print server device according to claim 2,
wherein the rendering condition includes a condition relevant to an attribute value of the component, and
the rendering unit performs the rendering or does not perform the rendering, in accordance with the attribute value of the component.

5. The print server device according to claim 1, further comprising:
a print object configuration information storage unit in which print object configuration information that is information including the print object identifier and two or more component identifiers for identifying the component information for configuring the print object identified by the print object identifier and is information indicating a configuration of a final print object is stored,
wherein the print object configuration unit configures a non-final print object by compositing one or more component images that are associated with one or more instances of component information identified by the print object identifiers and are stored in the component image storage unit, before all of the instances of component information that are associated with the two or more component identifiers pairing up with the print object identifiers included in the print object configuration information and configure the print object identified by the print object identifier included in the print object configuration information are on hand.

6. A print object configuration method fulfilled by a rendering unit, a component image accumulation unit, and a print object configuration unit, a recording medium including a component information storage unit in which two or more instances of component information are stored in association with print object identifiers for identifying one print object and a component image storage unit in which two or more component images associated with the two or more instances of component information are stored, the method comprising:
a rendering step of allowing the rendering unit to perform rendering on each of one or more instances of component information stored in the component information storage unit and acquire the component image that is an image of a component;
a component image accumulation step of allowing the component image accumulation unit to accumulate the component image acquired by the rendering unit in the component image storage unit; and
a print object configuration step of allowing the print object configuration unit to configure a print object by compositing the two or more component images stored in the component image storage unit.

7. A computer accessible recording medium comprising;
a component information storage unit in which two or more instances of component information are stored in association with print object identifiers for identifying one print object; and
a component image storage unit in which two or more component images associated with the two or more instances of component information are stored,
the recording medium recording a program for allowing the computer to function as:
a rendering unit for performing rendering on each of one or more instances of component information stored in the component information storage unit and acquiring the component image that is an image of a component;
a component image accumulation unit for accumulating the component image acquired by the rendering unit in the component image storage unit; and
a print object configuration unit for configuring a print object by compositing the two or more component images stored in the component image storage unit.
